# EUROPÄISCHE PATENTSCHRIFT

(11) **EP 3 833 626 B1**
(45) Veröffentlichungstag und Bekanntmachung des Hinweises auf die Patenterteilung: **05.07.2023**
(21) Anmeldenummer: 19748823.2
(22) Anmeldetag: 01.08.2019
(51) Int. Cl.: B66C 23/36, B60P 3/28

(54) **FAHRZEUGKRANSYSTEM ZUM TRANSPORT EINES ANBAUTEILS, INSBESONDERE EINES HAUPTAUSLEGERS EINES FAHRZEUGKRANS**
VEHICLE CRANE SYSTEM FOR TRANSPORTING AN ATTACHMENT PART, IN PARTICULAR A MAIN JIB OF A VEHICLE CRANE
SYSTÈME DE GRUE AUTOMOTRICE POUR LE TRANSPORT D'UNE PIÈCE DE MONTAGE, EN PARTICULIER D'UNE FLÈCHE PRINCIPALE D'UNE GRUE AUTOMOTRICE

(30) Priorität: 08.08.2018 DE 102018119315
(43) Veröffentlichungstag der Anmeldung: 16.06.2021
(73) Patentinhaber: Tadano Demag GmbH, 66482 Zweibrücken (DE)
(72) Erfinder: MEISSNER, Klaus, 66482 Zweibrücken (DE); ROTH, Matthias, 66914 Waldmohr (DE); KÖNIGSTEIN, Klaus, 66894 Martinshöhe (DE)
(74) Vertreter: Moser Götze & Partner Patentanwälte mbB
(86) Internationale Anmeldenummer: PCT/EP2019/070761
(87) Internationale Veröffentlichungsnummer: WO 2020/030521

(56) Entgegenhaltungen:
- DE-A1- 2 833 535
- FR-A1- 2 759 040
- JP-A- S5 032 639
- JP-U- S50 102 061
- US-A- 4 565 291

## Beschreibung

Die Erfindung betrifft ein Fahrzeugkransystem, gemäß dem Gegenstand des ersten Anspruchs. Weiterhin betrifft die Erfindung ein Verfahren zur Aufnahme eines von einem Fahrzeugkran lösbaren Anbauteils gemäß dem Gegenstand des Anspruchs 10. Auch betrifft die Erfindung ein Verfahren gemäß dem Gegenstand des Anspruchs 13.

Es ist allgemein bekannt, dass Fahrzeugkrane, insbesondere Mobilkrane, ihre unterschiedlichen Einsatzorte größtenteils über das öffentliche Straßennetz erreichen. Dessen Nutzung verlangt die Einhaltung einer maximalen Achslast, wobei insbesondere das Überfahren von Brücken zudem auf ein maximales Fahrzeuggewicht beschränkt ist. Überschreiten die tatsächliche Achslast oder das zulässige Fahrzeuggewicht die jeweils zulässigen Werte, müssen diese entsprechend reduziert werden. Zur Erfüllung der behördlichen Vorschriften sind hiervon betroffene Fahrzeugkrane üblicherweise so konzipiert, dass wenigstens eine ihrer Baugruppen demontierbar ist. Eine hohe Gewichtsreduktion lässt sich beispielsweise durch Entfernen des Hauptauslegers erreichen, der hierfür entsprechend lösbar an einem zumeist schwenkbaren Oberwagen des Fahrzeugkrans angeordnet sein kann. Aufgrund der Dimensionen und Massen der zu bewegenden Teile eines solchen Fahrzeugkrans werden hierzu geeignete Vorrichtungen benötigt, um eine praxistaugliche Montage sowie Demontage des Hauptauslegers vor Ort nebst dessen vom restlichen Fahrzeugkran getrennt erfolgenden Transport zu ermöglichen.

Die deutsche Offenlegungsschrift DE 198 23 380 A1 offenbart hierzu eine Kranausleger Transporteinheit mit einer mobilen Transportvorrichtung in Form eines Sattelaufliegers für den Transport eines von einem Fahrzeugkran getrennten Hauptauslegers. Auf der Transportvorrichtung ist ein Ablagebock angeordnet, auf welchem der Hauptausleger als Anbauteil des Fahrzeugkrans im Bereich seines Kopfendes abstützbar ist. Eine weitere Abstützung erfolgt über eine auf der Transportvorrichtung angeordnete gitterartige Ablage, über die der Hauptausleger an einem zwischen dem Kopfende und seinem dem Kopfende gegenüberliegenden Fußende gelegenen Grundkasten abstützbar ist. Eine Aufnahme des Hauptauslegers erfolgt derart, dass dieser zunächst auf die Transportvorrichtung abgewippt und sein dann auf dem Ablagebock abgestütztes und Richtung des Ablagebocks ausgefahrenes Kopfende mit diesem gekoppelt wird. Anschließend wird der Hauptausleger an seinem Fußende vom restlichen Fahrzeugkran gelöst. Unter Nutzung der Teleskopierbarkeit des Hauptauslegers können sich dessen noch überstehende Auslegerabschnitte nebst Grundkasten dann letztlich quasi aus Eigenkraft auf die Transportvorrichtung ziehen. An dem Grundkasten angeordnete Laufrollen rollen dabei auf der schienenartigen Ablage ab, um währenddessen eine durchgehende Abstützung zu ermöglichen.

Die Handhabung der vorbekannten Kranausleger Transporteinheit erfordert, dass die zur Demontage des Hauptauslegers von dessen Antrieb abtrennbaren Versorgungsleitungen unter Eingliederung von Verlängerungsleitungen wieder mit dem Antrieb temporär verbunden werden müssen. Über den das Kopfende stützenden Ablagebock hinaus wird die schienenartige Ablage benötigt, auf welcher der Grundkasten des Hauptauslegers zumindest abschnittsweise während seiner Längenänderung geführt und transportsicher abgelegt ist. Die Ausgestaltung der Ablage bedarf einer Anpassung an den Hauptausleger des Fahrzeugkrans, um insbesondere Schäden zu vermeiden. Gehören mehrere Fahrzeugkrane zu einem Maschinenpark, muss jeder einzelne zunächst in geeigneter Weise mit den Laufrollen nachgerüstet werden. Mitunter lassen sich hierbei nur individuelle Paarungen aus Kranausleger Transporteinheit und passendem Fahrzeugkran realisieren. Auch die anschließende Montage eines zuvor vom zugehörigen Fahrzeugkran gelösten und auf der Transportvorrichtung aufgenommenen Hauptauslegers zeigt sich bisweilen erschwert, da etwaige Fluchtungsfehler und/oder Winkelversätze zwischen dessen Fußende und der zugehörigen Kopplungsstelle des Fahrzeugkrans nur durch aufwendiges Rangieren der Transportvorrichtung und/oder Ausrichtung des schwenkbaren Oberwagens ausgleichbar sind.

Aus den Offenlegungsschriften DE 35 32 296 A1 sowie EP 0 867 399 A1 gehen selbstangetriebene Absetzkipper hervor, welche zum Aufnehmen und Absetzen von Containerbehältern dienen. Ein solcher Absetzkipper umfasst eine Ladefläche zur Aufnahme eines Containerbehälters. Das Aufnehmen und Absetzen des Containerbehälters erfolgt durch das Verschwenken von am hinteren Ende der Ladefläche angelenkten Tragarmen, deren freien Endabschnitte hierfür mit dem Containerbehälter koppelbar sind. Die Containerbehälter werden auf einer durch die bauliche Länge der Tragarme vorgegebenen kreisförmigen Bahn zwischen dem Untergrund und der Ladefläche bewegt. Das Verschwenken der Tragarme erfolgt mittels Hydraulikzylindern, von denen jeder zwischen dem Fahrzeugrahmen und einem der Tragarme eingegliedert ist.

In der gattungsgemäßen Offenlegungsschrift FR 2 759 040 A1 ist ein Fahrzeugkransystem gemäß dem Oberbegriff des Anspruchs 1 und ein Verfahren zum An- und Abbauen eines Teleskopauslegers an einen Oberwagen eines Fahrzeugkrans beschrieben. Hierbei wird der auf einem Sattelauflieger ruhende Teleskopausleger über schwenkbare Stützbeine aus einer horizontalen Transportstellung in eine ebenfalls horizontale Übergabestellung angehoben und gleichzeitig in Richtung des Fahrzeugkrans bewegt, um dort angebolzt zu werden. Für die Schwenkbewegung wird ein Wippzylinder für den Teleskopausleger des Fahrzeugkrans mit dem Teleskopausleger auf dem Sattelauflieger verbunden. Die Patentschrift US 4 565 291 A offenbart ein vergleichbares Verfahren, bei dem die Energie für die Schwenkbewegung der Stützbeine über hydraulische Zylinder an dem Sattelauflieger bereitgestellt wird.

Außerdem zeigt die Offenlegungsschrift DE 28 33 535 A1 ein weiteres Verfahren zum An- und Abbauen eines Teleskopauslegers an einen Oberwagen eines Fahrzeugkrans. Hierbei wird der auf einem Sattelauflieger ruhende Teleskopausleger über schwenkbare Stützbeine aus einer horizontalen Transportstellung in eine ebenfalls horizontale Stützstellung angehoben und dann von dem Sattelauflieger in Richtung des Oberwagens verfahren, um dort angebolzt zu werden.

In der japanischen Gebrauchsmusterschrift JP S50 102061 U ist als Lösung beschrieben, einen Teleskopausleger eines Fahrzeugkrans an einem Ende auf einer auf dem Sattelauflieger angeordneten und in dessen Längsrichtung verfahrbaren ersten Konsole und an dem anderem Ende auf einer ortsfesten Konsole zu lagern. Für den Anbau des Teleskopauslegers an den Fahrzeugkran wird ein Wippzylinder für den Teleskopausleger des Fahrzeugkrans mit dem Teleskopausleger auf dem Sattelauflieger verbunden und dann über eine Schwenkbewegung des Wippzylinders angehoben und zu dem Fahrzeugkran bewegt. Für die Schwenkbewegung ist ein zusätzlicher Hydraulikzylinder am Oberwagen des Fahrzeugkrans angeordnet. Die japanische Offenlegungsschrift JP S50 32639 A offenbart ein vergleichbares Verfahren, bei dem der auf den Konsolen ruhende Teleskopausleger horizontal zu dem Fahrzeugkran bewegt wird. Die Horizontal-Bewegung erfolgt einerseits über einen hydraulische Zylinder zum Verschieben der ersten verfahrbaren Konsole und andererseits einen Seiltrieb zwischen dem Fahrzeugkran und dem Sattelauflieger.

Der Erfindung liegt daher die Aufgabe zugrunde, eine wie zuvor aufgezeigte Fahrzeugkransystem dahingehend zu verbessern, dass die Demontage sowie Montage des Hauptauslegers eines Fahrzeugkrans nebst Transport insgesamt einfacher durchführbar sind. Weiterhin sollen zwei Verfahren aufgezeigt werden, durch welche das Aufnehmen eines von einem Fahrzeugkran lösbaren Hauptauslegers auf eine Transporteinheit einerseits und das Verbinden eines auf einer Transporteinheit aufgenommenen Hauptauslegers mit einem Fahrzeugkran andererseits vereinfacht wird.

Der Vorrichtungs Teil dieser Aufgabe wird durch ein Fahrzeugkransystem mit den Merkmalen von Anspruch 1 gelöst. Die Lösung des Verfahrens Teils dieser Aufgabe besteht in einem Verfahren mit den Merkmalen von Anspruch 10 sowie in einem Verfahren mit den Merkmalen von Anspruch 13. In den jeweils abhängigen Ansprüchen 2 bis 9 sowie 11 und 12 sowie 14 und 15 sind vorteilhafte Ausgestaltungen der Erfindung angegeben.

Hiernach umfasst das erfindungsgemäß ausgestaltete Fahrzeugkransystem, umfassend einen Fahrzeugkran mit einem lösbaren Anbauteil, insbesondere Hauptausleger, sowie eine zur Aufnahme des von dem Fahrzeugkran gelösten Anbauteils ausgebildete Anbauteil Transporteinheit mit einer mobilen Transportvorrichtung für den Transport des Anbauteils, wobei an der Transportvorrichtung wenigstens ein Verladearm angeordnet ist, an einem freien Tragende des Verladearms ein aufzunehmendes oder bereits aufgenommenes Anbauteil koppelbar ist und der Verladearm derart verschwenkbar an der Transportvorrichtung angeordnet ist, dass ein aufzuladendes beziehungsweise abzuladendes Anbauteil auf die Transportvorrichtung der von der Transportvorrichtung herunter bewegbar ist, nunmehr einen auf der Transportvorrichtung angeordneten Ablagebock, welcher zur Abstützung eines Anbauteils ausgebildet ist, insbesondere im Bereich eines Kopfendes des Anbauteils, wobei der Ablagebock parallel zu einer Längsrichtung der Transportvorrichtung verschieblich ist. Der wenigstens eine Verladearm dient dabei dem Verladen des von dem Fahrzeugkran abgelösten Anbauteils. In besonders bevorzugter Weise kann es sich bei dem Anbauteil um den Hauptausleger eines Fahrzeugkrans handeln. Die hierfür erforderliche, zumindest indirekte zeitliche Kopplung mit dem Anbauteil erfolgt über das freie Tragende des Verladearms, an welchem das Anbauteil zumindest während des Verladevorgangs beispielsweise angehängt oder abgestützt werden kann. Durch die schwenkbare Anordnung des wenigstens einen Verladearms an der Transportvorrichtung ist es möglich, dass ein aufzuladendes beziehungsweise abzuladendes Anbauteil in einfacher Weise auf die Transportvorrichtung herauf oder von der Transportvorrichtung herunter bewegbar ist.

Auch besitzt das Fahrzeugkransystem zudem einen auf der Transportvorrichtung angeordneten Ablagebock , welcher einem aufzuladenden oder bereits aufgeladenen Anbauteil zu dessen Abstützung dient. In vorteilhafter Weise kann sich das Anbauteil über sein Kopfende auf dem Ablagebock abstützen, wobei sich der restliche Teil des Anbauteils während seiner Verladung und im aufgeladenen Zustand weitestgehend frei hängend oberhalb der Transportvorrichtung befindet. Durch den so auf nur wenige klar definierte Bereiche des Anbauteils reduzierten Kontakt mit der Transportvorrichtung und den daran angeordneten Vorrichtungen sind etwaige Beschädigungen an dem Anbauteil ausgeschlossen. Hierbei ist der Ablagebock so auf der Transportvorrichtung angeordnet, dass dieser parallel zu deren Längsrichtung verschieblich ist. Hieraus ergibt sich die Möglichkeit zur exakten Positionierung des Ablagebocks gegenüber dem jeweils aufzuladenden Anbauteil mit von einem anderen Anbauteil unterschiedlicher Länge. Insbesondere mit Blick auf die über den wenigstens einen schwenkbaren Verladearm gegebene Systemkinematik kann sich ein auf dem verschieblichen Ablagebock abgestütztes Anbauteil vorteilhaft relativ zur Transportvorrichtung bewegen, indem beispielsweise dessen auf dem Ablagebock abgestütztes Kopfende während des Auf- und Abladens parallel zur Längsrichtung der Transportvorrichtung verlagerbar ist.

Der sich hieraus ergebende Vorteil liegt in dem vollständig über den wenigstens einen Verladearm der Anbauteil Transporteinheit des Fahrzeugkransystems möglichen Aufladen sowie Abladen eines Anbauteils auf die beziehungsweise von der Transportvorrichtung. Insbesondere in Form eines Hauptauslegers des Anbauteils ist nunmehr eine deutlich erleichterte Verladung möglich, ohne dessen bisher benötigte aktive Teleskopierbarkeit einsetzen zu müssen. Damit reduziert sich der bei der Montage sowie Demontage eines Anbauteils in Form eines Hauptauslegers notwendige Aufwand auf ein jeweils einmaliges Verbinden oder Trennen seiner Versorgungsleitungen. Bisher mussten diese unter temporärer Eingliederung von Zwischenleitungen verlängert werden, um den zum Teleskopieren dienenden Antrieb auch im vom restlichen Fahrzeugkran entfernten Zustand seines Hauptauslegers ansteuern zu können. Erfindungsgemäß kann das sonst übliche Hantieren mit den zumeist dicken und insofern schweren Versorgungs- und/oder Zwischenleitungen - wie etwa Hydraulikleitungen - entfallen, was den Prozess insgesamt erleichtert und die Benutzerfreundlichkeit deutlich erhöht. Damit ist die Teleskopierbarkeit nicht mehr Teil des Verladevorgangs, da der in Bezug auf seine Länge bevorzugt zuvor eingefahrene Hauptausleger ausschließlich über den wenigstens einen Verladearm auf die Transportvorrichtung aufladbar und wieder von dieser abladbar ist. Eine zusätzliche Bewegung seines, insbesondere den Rollenkopf aufweisenden, Kopfendes und/oder dessen gegenüberliegenden Fußendes über ein Teleskopieren des bereits vom Fahrzeugkran gelösten Hauptauslegers entfällt.

Weiterhin ist die sonst übliche Umrüstung bestehender sowie Ausrüstung neuer Fahrzeugkräne auf ein Minimum reduziert oder kann sogar vollständig entfallen, da die erfindungsgemäße Anbauteil Transporteinheit einen nahezu universellen Einsatz erlaubt. So kann bereits auf ansonsten erforderliche und an den Segmenten bzw. Abschnitten des Hauptauslegers beispielsweise anzuschweißende Festpunkte für etwaige Gleit- und/oder Drehkörper zumeist verzichtet werden, da der Hauptausleger selbst sich während seiner Verladung nun nicht mehr gleitend und/oder rollend über seine Segmente und/oder seinen Grundkasten abstützen muss.

Die Erfindung sieht vor, dass das Fahrzeugkransystem eine auf der Transportvorrichtung angeordnete Ablage besitzen kann, welche zur Abstützung eines auf die Transportvorrichtung aufgeladenen Anbauteils vorgesehen ist. Besagte Ablage dient dabei als Konsole, auf welche ein auf die Transportvorrichtung aufgeladenes Anbauteil bereichsweise ablegbar ist. Insbesondere in Kombination mit dem, bevorzugt gegenüber der Ablage parallel zur Längsrichtung der Transportvorrichtung beabstandeten Ablagebock, ergibt sich so eine zweifache Auflagermöglichkeit für ein Anbauteil. Auf diese Weise ist es möglich, ein aufgeladenes Anbauteil insbesondere während seines Transports auf der Transportvorrichtung von dem wenigstens einen Verladearm zu entkoppeln. Durch eine bevorzugte mögliche Sicherung des Anbauteils auf der Ablage und/oder dem Ablagebock ist dessen gefahrloser Transport auf der Transportvorrichtung gegeben. Sicherung meint hierbei eine zeitliche Kopplung des Anbauteils mit der Transportvorrichtung über die Ablage und/oder den Ablagebock, um beispielsweise einem ansonsten möglichen Versatz oder gar Herunterfallen des Anbauteils während seines mit entsprechenden Bewegungen einhergehenden rollenden Transports vorzubeugen.

Mit Bezug auf die Anordnung eines Ablagebocks wird es als besonders vorteilhaft angesehen, wenn dieser eine Ausgestaltung aufweist, welche die Beweglichkeit eines auf diesem abstützbaren Anbauteils ermöglicht. Dies meint, dass beispielsweise ein Kopfende des Hauptauslegers eines Fahrzeugkrans derart spannungsfrei auf dem Ablagebock abstützbar ist, um ein dem Kopfende gegenüberliegendes Fußende des Hauptauslegers zumindest begrenzt frei im Raum verschwenken zu können. Mit anderen Worten ermöglicht der Ablagebock damit eine quasi gelenkige Abstützung eines Anbauteils auf diesem.

Erfindungsgemäß kann der wenigstens eine Verladearm derart verschwenkbar an der Transportvorrichtung des Fahrzeugkransystems angeordnet sein, dass ein aufzuladendes beziehungsweise abzuladendes Anbauteil auf einem Pfad beziehungsweise einer Bahn bewegbar ist, welche/r einen Bewegungsanteil sowohl in eine Vertikalrichtung als auch in eine Horizontalrichtung enthält. Am Beispiel eines als Hauptauslegers ausgebildeten Anbauteils ist hierdurch ein einfaches Herauf- sowie Herabbewegen auf beziehungsweise von der Transportvorrichtung gegeben, ohne dass es hierfür der aktiven Längenveränderung des Hauptauslegers bedarf.

Der zum Verladen eines Anbauteils, wie beispielsweise eines Hauptauslegers, verschwenkbare wenigstens eine Verladearm kann in vorteilhafter Weise so an der Transportvorrichtung angeordnet sein, dass ein mit dessen freiem Tragende zumindest indirekt gekoppeltes und gleichzeitig mit seinem Kopfende auf dem verschieblichen Ablagebock abgestütztes Anbauteil entsprechend beweglich ist. Durch eine Schwenkbewegung des Verladearms ist es nunmehr möglich, ein aufzunehmendes beziehungsweise aufzuladendes Anbauteil einerseits in eine dann relativ zur Transportvorrichtung erfolgende Auflade Bewegung hin zur Ablage, insbesondere also weg von einem zugehörigen Fahrzeugkran, zu versetzen. Andererseits besteht durch eine entgegengesetzt erfolgende Schwenkbewegung des Verladearms die Möglichkeit, ein aufgenommenes Anbauteil in eine relativ zur Transportvorrichtung erfolgende Ablade Bewegung weg von der Ablage, insbesondere also hin zum zugehörigen Fahrzeugkran, zu versetzen. Sowohl die Auflade als auch die Ablade Bewegung erfolgen dabei als jeweils kombinierte translatorische sowie begrenzt rotatorische Bewegung relativ zur Transportvorrichtung.

Ursächlich hierfür ist die während des Verladens über zwei voneinander entfernte Bereiche erfolgende Lagerung des Anbauteils, nämlich an dem wenigstens einen Verladearm und dem verschieblichen Ablagebock. Hierdurch kann dessen auf dem Ablagebock abgestütztes Kopfende während der Schwenkbewegung des Verladearms parallel zur Transportvorrichtung verschoben werden, während sein dem Kopfende gegenüberliegendes Fußende auf einer Kreisbahn des an der Transportvorrichtung angelenkten Verladearms bewegt wird. Der Ablagebock lässt dabei eine zumindest begrenzte Rotation zu, so dass ein auf diesem abgestütztes Kopfende eines Anbauteils dessen während seines Verladens naturgemäß auftretendes Verschwenken relativ zum Ablagebock ermöglicht. Aufgrund der Verschieblichkeit des Ablagebocks bildet dieser dabei kein starres Widerlager, sondern kann der durch den wenigstens einen Verladearm systembedingten Kinematik parallel zur Längsrichtung der Transportvorrichtung folgen und währenddessen ein aufzuladendes oder bereits aufgeladenes beziehungsweise aufgenommenes Anbauteil, insbesondere an seinem Kopfende, abstützen.

Bevorzugt kann das Fahrzeugkransystem so ausgestaltet sein, dass diese die Aufnahme eines von einem drehbaren Oberwagen eines Fahrzeugkrans lösbaren Anbauteils ermöglicht, insbesondere dessen Hauptausleger.

Vorteilhafterweise kann es sich bei der Transportvorrichtung um einen Sattelauflieger handeln. Dieser kann vollständig für den angedachten Zweck gefertigt sein oder einen handelsüblichen Sattelauflieger als Basis aufweisen. Durch die Auswahl eines in Bezug auf die erforderlichen Abmessungen und Traglasten passenden Sattelaufliegers kann dieser beispielsweise um die erforderlichen Komponenten ergänzt und so in wirtschaftlicher Weise zu einer erfindungsgemäßen Transportvorrichtung ausgebaut sein.

Auch wenn der für das Auf- und Abladen eines Anbauteils notwendige Antrieb in Form einer aktiven Verschieblichkeit des Ablagebocks erfolgen könnte, sieht die Erfindung in vorteilhafter Weise eine demgegenüber aktive Verschwenkbarkeit des wenigstens einen Verladearms vor. Selbstverständlich ist auch eine Kombination aus aktivem Antrieb des Ablagebocks und des wenigstens einen Verladearms denkbar. Insbesondere die bevorzugte aktive Verschwenkbarkeit des wenigstens einen Verladearms lässt eine präzise Führung des mit diesem gekoppelten Anbauteils zu, was im Hinblick auf die möglichen Abmessungen und das Gewicht eines solchen Anbauteils, wie etwa eines Hauptauslegers, von hoher Bedeutung ist.

Gemäß einer besonders bevorzugten Weiterbildung der Erfindung können insgesamt zwei Verladearme vorgesehen sein, die dann als Verladeanordnung schwenkbar an der Transportvorrichtung angeordnet sind. Dies ermöglicht eine bessere, da gleichmäßigere Gewichtsverteilung des Anbauteils, wie etwa eines Hauptauslegers, auf die Verladearme. Zudem können Verladearme und Anbauteil im Einsatz dann so zueinander positioniert sein, dass das Anbauteil während seiner Verladung im Wesentlichen zwischen den beiden Verladearmen gelegen ist. Die Verladearme können so angesteuert sein, dass deren jeweilige Schwenkbewegung/en entweder synchron zueinander und/oder voneinander unabhängig ausführbar sind. Dies kann zum einen durch eine starre Verbindung beider Verladearme erfolgen, was deren zwangsläufig mechanische Synchronisierung bewirkt. Andererseits kann die ansonsten voneinander unabhängige Beweglichkeit beider Verladearme so angesteuert sein, dass diese je nach Bedarf entweder synchron zueinander oder voneinander unabhängig beweglich sind. Je nach Kopplungsart der Verladearme, beispielsweise mit einem Hauptausleger, ermöglicht insbesondere deren voneinander unabhängige Beweglichkeit eine Feinjustierung in der Ausrichtung seines Fußendes, was insbesondere bei der Montage eines Hauptauslegers vorteilhaft sein kann.

Mit Blick auf die notwendige zeitliche Kopplung eines Anbauteils mit dem Tragende des wenigstens einen Verladearms oder den Tragenden eines Paares an Verladearmen schlägt die Erfindung den Einsatz eines lösbaren Haltemittels vor. Ein solches, dem Verladearm beziehungsweise der Verladeanordnung zugehöriges Haltemittel kann bevorzugt flexibel ausgestaltet sein. Flexibel meint hierbei nicht dessen Dehnbarkeit, sondern vielmehr die Beweglichkeit eines solchen Haltemittels im Sinne von biegeschlaff. Bevorzugt kann es sich bei dem Haltemittel daher um ein Band oder einen Gurt oder eine Kombination aus diesen handeln. Selbstverständlich sind auch weitergehende Ausgestaltungen und Kombinationen denkbar, beispielsweise in Form einer Kette, insbesondere Gliederkette, und/oder eines Riemens und/oder eines Seils. Damit benötigt ein so ausgestaltetes Haltemittel keine zwingend komplementäre Ausbildung eines Anbauteils, wie beispielsweise mittels einer eigens hierfür an einem Hauptausleger angeordneten und mit dem Haltemittel korrespondierenden Verbindungsstelle. Mit anderen Worten ist durch ein solches Haltemittel eine vielfache Einsatzmöglichkeit der Anbauteil Transporteinheit in Kombination mit unterschiedlichen Anbauteilen möglich.

Besagtes Haltemittel ist bei Bedarf mit dem Tragende des wenigstens einen Verladearms verbindbar. Besonders bevorzugt kann das Haltemittel zwischen den Tragenden zweier Verladearme lösbar angeordnet sein. In der letztgenannten Ausgestaltung ergibt sich eine Art flexible Lagerung, in welche hinein der Hauptausleger mit einem Auslegerabschnitt ablegbar ist. Bei einer so quasi hängenden Abstützung eines Anbauteils ergibt sich gleichzeitig eine vorteilhafte seitliche Führung, da sich das flexible Haltemittel naturgemäß von einer Unterseite des Anbauteils her umfangsseitig um einen Teil eines Anbauteilabschnitts herumlegt.

Hinsichtlich der Anordnung des wenigstens einen verschwenkbaren Verladearms oder der beiden verschwenkbaren Verladearme wird ein möglichst tiefliegender Gelenkpunkt als vorteilhaft angesehen. So kann die Transportvorrichtung eine Ladefläche besitzen, welche einem aufgenommenen und dabei im Wesentlichen horizontal ausgerichteten Anbauteil, wie etwa einem Hauptausleger, zugewandt ist. In diesem Zusammenhang wird vorgeschlagen, den oder die Verladearm/e über eine Drehachse unterhalb der Ladefläche anzulenken, so dass diese/r um die Drehachse herum schwenkbar ist. Dies ermöglicht einen möglichst tiefen Schwerpunkt für die anteilige Gewichtseinleitung eines aufgenommenen Anbauteils in die Transportvorrichtung und von dort aus auf den Untergrund, beispielsweise über ein Räder und/oder Ketten aufweisendes Fahrwerk. Gegenüber einer auf oder über der Ladefläche möglichen Anlenkung des/der Verladearms/Verladearme ermöglicht die tiefe Anordnung der Drehachse dessen/deren größere Länge, wodurch sich die translatorische Verlagerung eines aufgenommenen Anbauteils entsprechend vergrößern lässt. Mit anderen Worten lässt sich so eine größere Reichweite in Bezug auf die Verlagerung eines Anbauteils parallel zur Transportvorrichtung erreichen.

Hinsichtlich des Antriebs des/der Verladearms/Verladearme sind diverse Ausgestaltungen denkbar, wie etwa in Form wenigstens eines im Bereich des/der Schwenklager/s angeordneten Drehantriebs. Bevorzugt kann die Anbauteil Transporteinheit einen zwischen dem wenigstens einen Verladearm und der Transportvorrichtung eingegliederten Linearantrieb besitzen. Bei der bevorzugten Ausführung mit zwei Verladearmen kann zwischen jedem dieser Verladearme und der Transportvorrichtung ein solcher Linearantrieb als Teil der Verladeanordnung angeordnet sein.

Bei dem Linearantrieb im Sinne der Erfindung kann es sich um alle Arten solcher Antriebe handeln, welche beispielsweise druckbetätigt, insbesondere pneumatisch oder bevorzugt hydraulisch angetrieben sind. Hiernach kann es sich bei dem Linearantrieb beispielsweise um einen Hydraulikzylinder handeln. Ergänzend oder alternativ kann dieser auch über ein Getriebe angetrieben sein, bei dem eine rotatorische Bewegung eines Motors in eine translatorische Bewegung des Linearantriebs umgesetzt wird, wie beispielsweise mittels eines Rollen- oder Kugelgewindegetriebes. In jedem Fall basiert eine Schwenkbewegung des/der Verladearms/Verladearme dann auf einer Längenänderung des/der Linearantriebs/ Linearantriebe.

Die Form des wenigstens einen Verladearms sollte an die jeweiligen Gegebenheiten in Bezug auf die Ausgestaltung der Anbauteil Transporteinheit unter Berücksichtigung des typischen Aufbaus eines Fahrzeugkrans angepasst sein. Hierzu kann der/jeder Verladearm bevorzugt einen geraden Mittenabschnitt besitzen, welcher sich zwischen zwei demgegenüber abgewinkelten Endabschnitten erstreckt. In dieser Ausgestaltung schließt jeder der beiden Endabschnitte und der Mittenabschnitt jeweils einen Winkel zwischen sich ein. In bevorzugter Weise können die Endabschnitte dabei in dieselbe Richtung abgewinkelt sein, wodurch sich eine vorteilhafte mehrfach abgewinkelte Form für den Verladearm ergibt, um etwaige Kollisionen mit Störkanten des Fahrzeugkrans und/oder der Anbauteil Transporteinheit wirksam zu vermeiden.

Um ein vorteilhaftes Kräfteverhältnis in Bezug auf den/die Verladearm/e und Linearantrieb/e zu erhalten, wird es als vorteilhaft angesehen, wenn der Mittenabschnitt des Verladearms einen Kopplungsbereich aufweist, welcher zur kraftübertragenden Verbindung mit dem Linearantrieb dient. So kann der Mittenabschnitt des oder eines Verladearms mit einem ersten Ende des Linearantriebs verbunden sein, während ein dem ersten Ende des Linearantriebs gegenüberliegendes zweites Ende mit der Transportvorrichtung gekoppelt ist. Die Kopplung zwischen Linearantrieb und Transportvorrichtung kann beispielsweise über ein Lager erfolgen, welches auf der Ladefläche der Transportvorrichtung angeordnet ist.

In Bezug auf die mehrfach abgewinkelte Form des Verladearms können dessen Endabschnitte bevorzugt zu einer dem Linearantrieb abgewandten Seite hin abgewinkelt sein.

Gemäß einer vorteilhaften Weiterentwicklung ist denkbar, dass der Verladearm teleskopierbar ausgebildet ist. Dies meint eine bedarfsweise Veränderbarkeit seiner Länge, wodurch sich beispielsweise eine größere Entfernung zwischen Verladeeinheit und Fahrzeugkran entsprechend überbrücken lässt. Alternativ oder in Kombination hierzu kann so ein Anbauteil auch weiter auf die Transportvorrichtung aufgenommen werden, sofern erforderlich. Hierzu kann der Verladearm mehrteilig ausgebildet sein, beispielsweise in Form mehrschüssiger Segmente.

Die mobile Transportvorrichtung kann aktiv oder passiv beweglich ausgestaltet sein. Dies meint, dass die Anbauteil Transporteinheit beispielsweise selbstangetrieben sein kann, so dass diese quasi automobil, also aus eigenem Antrieb heraus, zwischen ihren Einsatzorten und/oder zum Rangieren verfahrbar ist. Alternativ oder in Ergänzung hierzu kann diese in Bezug auf ihre Verlagerbarkeit selbstverständlich auch nur mitführbar im Sinne eines Anhängers sein. Hierzu kann diese bevorzugt mit einem geeigneten Zugfahrzeug - wie etwa einem Sattelschlepper - gekoppelt werden, welches die dann gezogene und/oder geschobene Anbauteil Transporteinheit mit sich führt.

Gemäß einer bevorzugten Weiterbildung kann der wenigstens eine Verladearm beziehungsweise die Verladeanordnung so ausgestaltet sein, dass diese/r von einem nicht zwingend in unmittelbarer Nähe gelegenen Bereich aus bedienbar ist. Üblicherweise werden die an Fahrzeugen angeordneten Antriebe zur Bewegung solcher Vorrichtungen beispielsweise über eine im und/oder am Fahrzeug selbst angeordnete Bedieneinheit betrieben. Hier sieht die Erfindung die vorteilhafte Möglichkeit zur Bedienung des/der Verladearms/Verladearme von außerhalb vor. Dies meint die Bedienung von außerhalb einer Fahrzeugkabine, die bei einer beispielsweise selbstangetriebenen mobilen Transportvorrichtung Teil der so ausgestalteten Anbauteil Transporteinheit sein kann. Bei einer bevorzugten Ausgestaltung der Anbauteil Transporteinheit, bei welcher deren mobile Transportvorrichtung beispielsweise mit einem Zugfahrzeug gekoppelt oder koppelbar ist, kann besagte Fahrzeugkabine entsprechend Teil dieses Zugfahrzeugs sein.

Besonders bevorzugt kann die Ansteuerung des Verladearms beziehungsweise der Verladeeinheit mittels einer drahtlosen oder drahtgebundenen Bedieneinheit erfolgen. Hierdurch ist größtmögliche Flexibilität für eine die Anbauteil Transporteinheit bedienende Person gegeben. Die Möglichkeit zur räumlichen Entfernung von der Anbauteil Transporteinheit bietet dabei einen wesentlich besseren Überblick, um trotz der mitunter erheblichen Dimensionen derartiger Fahrzeugkrane und beispielsweise deren Hauptausleger eine überaus präzise Ansteuerung des Verladearms beziehungsweise der Verladeeinheit zu gewährleisten. Dies insbesondere im Hinblick auf die Möglichkeit zum Ausgleich von Fluchtungsfehlern und/oder Winkelversätzen während der Kopplung von Hauptausleger und Kranfahrzeug über die getrennte Ansteuerung zweier Verladearme.

Um eine größtmögliche und möglichst spannungsfreie Abstützung eines aufgenommenen Anbauteils, wie beispielsweise eines Hauptauslegers zu ermöglichen, wird vorgeschlagen, dass wenigstens eine Haltemittel entsprechend beweglich an dem Tragende eines Verladearms oder an den Tragenden zweier Verladearme anzuordnen. Dies meint beispielsweise die zumindest begrenzte Verdrehbarkeit des Haltemittels relativ zum Verladearm, insbesondere ein quasi freies Schwingen. Auf diese Weise ist der mit dem Haltemittel in Kontakt stehende Abschnitt eines Anbauteils stets sicher gehalten und vor etwaigen Beschädigungen, beispielsweise durch rückdrehende Kräfte des Haltemittels, geschützt.

Nach einer besonders bevorzugten Ausgestaltung des Haltemittels kann dieses zumindest bereichsweise mit einer rutschhemmenden Oberfläche ausgestattet sein. In vorteilhafter Weise ist ein dem Anbauteil im aufgenommenen Zustand zugewandter Bereich des Haltemittels entsprechend ausgestattet, um die Haftreibung zwischen Haltemittel und Anbauteil entsprechend zu erhöhen.

Die Erfindung sieht vor, dass die Transportvorrichtung der Anbauteil Transporteinheit eine Kopplungseinrichtung besitzen kann, welche mit einer korrespondierenden Kopplungseinrichtung eines Fahrzeugkrans lösbar verbindbar ist. Durch die so mögliche temporäre Kopplung von Fahrzeugkran und Transportvorrichtung ist sichergestellt, dass zwischen diesen keine unerwünschten Relativbewegungen auftreten können, beispielsweise während des Trenn- oder Kopplungsvorgangs des Hauptauslegers. Sofern besagte Kopplung die bevorzugte Übertragbarkeit von Vertikalkräften zulässt, kann hierdurch eine sonst notwendige vertikale Abstützung der Transportvorrichtung entfallen. Tatsächlich sind die an der Transportvorrichtung auftretenden Vertikalkräfte über die Kopplungseinrichtung/en auf den Fahrzeugkran übertragbar, was durch den Wegfall einer eigenen Vertikalabstützung einen überaus wirtschaftlichen Aufbau der gesamten Anbauteil Transporteinheit ermöglicht. Bei den Kopplungseinrichtungen kann es sich beispielsweise um eine Anhängerkupplung handeln.

Nach einer bevorzugten Weiterbildung der Erfindung ist vorgesehen, die zur Abstützung eines aufgeladenen Anbauteils dienende Ablage klappbar an der Transportvorrichtung anzuordnen. Die klappbare Ausgestaltung der Ablage ermöglicht deren Abklappen während ihres Nichtgebrauchs, so dass der während des Verladens eines Anbauteils zur Verfügung stehende Raum maximiert ist. Auf diese Weise kann ein gegenüber dem restlichen Fahrzeugkran in horizontaler Richtung überstehendes Anbauteil, wie beispielsweise dessen Hauptausleger, mit der Transportvorrichtung weitestgehend unterfahren werden, ohne eine mögliche Kollision mit der Ablage zu riskieren. Anschließend kann die Ablage beispielsweise erst kurz vor dem finalen Ablegen des Anbauteils auf der Transportvorrichtung in ihre Funktionsstellung aufgestellt werden, um als vollwertiges Auflager zur Verfügung zu stehen.

Das nunmehr vorgestellte erfindungsgemäße Fahrzeugkransystem ermöglicht die überaus einfache Demontage sowie Montage des Anbauteils eines Fahrzeugkrans. Insbesondere in der Ausgestaltung mit zwei Verladearmen lässt sich beispielsweise ein vom Fahrzeugkran gelöster Hauptausleger innerhalb kürzester Zeit auf die Transportvorrichtung überführen und wieder an den Fahrzeugkran heranbringen. In Kombination mit dem zwischen den Tragenden der Verladearme anordenbaren Haltemittel ist der darin abstützbare Abschnitt des jeweiligen Anbauteils in der horizontalen Ausrichtung seines Fußendes ausrichtbar, indem die beiden Verladearme unabhängig voneinander verschwenkt werden. Das oder die Haltemittel umschlingen das Anbauteil dabei teilweise, was einen überaus schonenden Umgang beispielsweise mit der Unterschale des Grundkastens eines Hauptauslegers hinsichtlich Verformung, Langlebigkeit, Materialabrieb, Korrosionsschutz und/oder Sicherheit gewährleistet.

Die Erfindung ist ferner auf ein Fahrzeugkransystem gerichtet, welches eine wie zuvor beschriebene erfindungsgemäße Anbauteil Transporteinheit sowie ein mit einer mobilen Transportvorrichtung der Anbauteil Transportanordnung koppelbares oder gekoppeltes Zugfahrzeug umfasst. Auch ist die Erfindung auf ein Fahrzeugkransystem gerichtet, welches einen Fahrzeugkran mit lösbarem Hauptausleger sowie eine zur Aufnahme des vom Fahrzeugkran gelösten Hauptauslegers ausgebildete Anbauteil Transportanordnung oder ein Anbauteil Transportsystem umfasst.

Weiterhin ist die Erfindung auf ein Verfahren gerichtet, bei dem ein von einem Fahrzeugkran, insbesondere von dessen drehbarem Oberwagen, lösbares Anbauteil in Gestalt dessen Hauptauslegers auf die Transportvorrichtung einer wie zuvor beschriebenen erfindungsgemäßen Anbauteil Transporteinheit aufgenommen wird. Das Verfahren umfasst die folgenden Schritte:
- Bereitstellen der Anbauteil Transporteinheit in Verlängerung des Fahrzeugkrans;
- Ausrichten einer Längsrichtung des Hauptauslegers des Fahrzeugkrans zu einer Längsrichtung der Transportvorrichtung;
- Ablegen eines Kopfendes des Hauptauslegers auf einem Ablagebock der Transportvorrichtung durch Abwippen des Hauptauslegers über dessen Wippzylinder;
- Entkoppeln des Wippzylinders von dem Hauptausleger, insbesondere durch Demontage eines Kopfbolzens.

Erfindungsgemäß umfasst das Verfahren weiterhin die folgenden Schritte:
- Verschwenken zweier Verladearme der Anbauteil Transporteinheit derart, bis beide Verladearme mit ihren freien Tragenden in den Bereich eines zwischen Kopfende und Fußende gelegenen Grundkastens des Hauptauslegers ragen;
- Anordnen eines Haltemittels zwischen den Tragenden der beiden Verladearme derart, dass sich das Haltemittel bis zu einem Grundkasten des Hauptauslegers erstreckt, insbesondere unterhalb des Grundkastens des Hauptauslegers hindurch erstreckt;
- Herstellen einer lösbaren Verbindung zwischen Haltemittel und Grundkasten, insbesondere durch zumindest teilweises Umgreifen des Grundkasten mit dem Haltemittel von einer Unterseite her;
- Verschwenken der beiden Verladearme derart, dass der Hauptausleger zumindest einseitig über das, insbesondere den Grundkasten des Hauptauslegers von der Unterseite her zumindest teilweise umgreifende, Haltemittel angehoben und so eine lösbare Verbindung zwischen dem Fahrzeugkran und seinem Hauptausleger zumindest teilweise entlastet wird;
- Trennen von Versorgungsleitungen zwischen Fahrzeugkran und seinem Hauptausleger, insbesondere an den dafür vorgesehenen Kupplungen;
- Lösen der Verbindung zwischen Hauptausleger und Fahrzeugkran, insbesondere durch Demontage eines diese miteinander verbindenden Fußbolzens;
- Verschwenken der beiden Verladearme derart, bis der über den parallel zur Längsrichtung der Transportvorrichtung verschieblichen Ablagebock abgestützte, und insbesondere durch Zwischenschaltung des Haltemittels indirekt mit den Tragenden der Verladearme gekoppelte, Hauptausleger durch eine relativ zur Transportvorrichtung erfolgende, kombinierte translatorische sowie begrenzt rotatorische Auflade Bewegung vom Fahrzeugkran weg auf die Transportvorrichtung aufgenommen und auf einer Ablage der Transportvorrichtung abgelegt, insbesondere abgestützt, wird.

In vorteilhafter Weise kann vor der Auflade Bewegung oder vor einem der Auflade Bewegung vorangehenden Schritte der Fahrzeugkran in geeigneter Weise abgestützt werden, beispielsweise über daran angeordnete Stützvorrichtungen. Die Abstützung kann dabei bevorzugt gegenüber dem jeweiligen Untergrund erfolgen.

Nach einer bevorzugten Weiterbildung des erfindungsgemäßen Verfahrens kann vor der Auflade Bewegung oder vor einem der Auflade Bewegung vorangehenden Schritte die Anbauteil Transporteinheit mit dem Fahrzeugkran gekoppelt werden. Zum Transport des auf der Transportvorrichtung aufgenommenen Hauptauslegers wird die Abstützung des Fahrzeugkrans entsprechend aufgehoben und die Anbauteil Transporteinheit von dem restlichen Fahrzeugkran entkoppelt. In vorteilhafter Weise kann der Hauptausleger zum Transport auf der Transportvorrichtung gesichert werden, wie beispielsweise durch geeignete Transportsicherungen.

Weiterhin ist die Erfindung auf ein Verfahren gerichtet, bei dem ein auf einer wie zuvor bereits beschriebenen erfindungsgemäßen Anbauteil Transporteinheit aufgenommener beziehungsweise abgelegter Hauptausleger mit einem zugehörigen Fahrzeugkran verbunden wird. Der so aufgenommene Hauptausleger ist dabei mit seinem Kopfende auf einem Ablagebock und mit einem zwischen dem Kopfende und seinem diesem gegenüberliegenden Fußende gelegenen Grundkasten auf einer Ablage abgestützt. Das Verfahren umfasst die folgenden Schritte:
- Bereitstellen der Anbauteil Transporteinheit mit dem aufgenommenen Hauptausleger im Bereich des Fahrzeugkrans derart, dass der Hauptausleger mit seinem Fußende voran auf eine mit dessen Fußende korrespondierende, insbesondere an einem drehbaren Oberwagen gelegene, Kopplungsstelle des Fahrzeugkrans hin ausgerichtet ist.

Erfindungsgemäß umfasst das Verfahren weiterhin die folgenden Schritte:
- Verschwenken zweier Verladearme der Anbauteil Transporteinheit derart, bis der Hauptausleger durch ein zwischen den Tragenden der Verladearme bereits angeordnetes sowie, insbesondere durch Umgreifen des Grundkastens von einer Unterseite her, lösbar mit dem Grundkasten verbundenes oder zuvor anzuordnendes sowie, insbesondere durch Umgreifen des Grundkastens von einer Unterseite her, lösbar mit dem Grundkasten zu verbindendes Haltemittel von der Ablage der Transportvorrichtung angehoben und mit seinem Fußende voran durch eine auf Basis der Schwenkbewegungen der Verladearme relativ zur Transportvorrichtung erfolgende, kombinierte translatorische sowie begrenzt rotatorische Ablade Bewegung weg von der Ablage zumindest teilweise zum Fahrzeugkran hin bewegt wird, wobei der Ablagebock (8) parallel zu einer Längsrichtung (L) der Transportvorrichtung (6) verschoben wird;
- bedarfsweises Ausrichten des Fußendes des Hauptauslegers gegenüber einer korrespondierenden Kopplungsstelle des Fahrzeugkrans durch synchrone und/oder voneinander unabhängige Schwenkbewegungen der Verladearme;
- Verbinden des Hauptauslegers mit dem Fahrzeugkran, insbesondere durch Montage eines diese miteinander verbindenden Fußbolzens;
- Verschwenken der beiden Verladearme derart, bis das lösbar mit dem Grundkasten des Hauptauslegers verbundene Haltemittel entspannt wird;
- Ablösen des Haltemittels von den Tragenden der Verladearme;
- Verbinden von Versorgungsleitungen zwischen Fahrzeugkran und seinem Hauptausleger, insbesondere an den dafür vorgesehenen Kupplungen;
- vorheriges oder anschließendes Verbinden eines Wippzylinders des Fahrzeugkrans mit dem Hauptausleger, insbesondere durch Montage eines Kopfbolzens.

In vorteilhafter Weise kann vor der Ablade Bewegung oder vor einem der Ablade Bewegung vorangehenden Schritte der Fahrzeugkran in geeigneter Weise abgestützt werden, beispielsweise über daran angeordnete Stützvorrichtungen. Die Abstützung kann dabei bevorzugt gegenüber dem jeweiligen Untergrund erfolgen.

Nach einer bevorzugten Weiterbildung des erfindungsgemäßen Verfahrens kann vor der Ablade Bewegung oder vor einem der Ablade Bewegung vorangehenden Schritte die Anbauteil Transporteinheit mit dem Fahrzeugkran gekoppelt werden. Zum anschließenden Fortbewegen und/oder Einsatz des mit dem Hauptausleger verbundenen Fahrzeugkrans wird dessen Abstützung aufgehoben und die Anbauteil Transporteinheit von dem restlichen Fahrzeugkran entkoppelt.

Die sich aus dem jeweiligen erfindungsgemäßen Verfahren ergebenden Vorteile wurden bereits im Zusammenhang mit der erfindungsgemäßen Anbauteil Transporteinheit aufgezeigt oder zumindest sinngemäß angesprochen, so dass zur Vermeidung von Wiederholungen an dieser Stelle auf die vorangegangenen Ausführungen hierzu verwiesen wird.

Selbstverständlich können die zuvor beispielhaft an einem Hauptausleger eines Fahrzeugkrans näher beschriebenen erfindungsgemäßen Verfahren auch für andere Anbauteile Anwendung finden. Dies je nach Ausgestaltung und Einbindung des jeweiligen Anbauteils auch unter Streichung und/oder sinngemäßen Anpassung der im Zusammenhang mit einem Wippzylinder stehenden Maßnahme/n.

Ein Ausführungsbeispiel der Erfindung wird anhand der nachfolgenden Beschreibung näher erläutert. Es zeigen:
Figur 1 ein erfindungsgemäßes Fahrzeugkransystem in einer Seitenansicht,
Figur 2 einen Teil des Fahrzeugkransystems 1 aus Figur 1 in Form einer Anbauteil Transporteinheit,
Figur 3 einen Ausschnitt der Anbauteil Transporteinheit aus Figur 2 in veränderter Stellung,
Figur 4 den Ausschnitt der Anbauteil Transporteinheit aus Figur 3 in der Stellung gemäß Figur 2,
Figur 5 eine alternative Ausgestaltung der Anbauteil Transporteinheit aus Figur 4,
Figur 6 eine weitere alternative Ausgestaltung der Anbauteil Transporteinheit,
Figur 7 das Fahrzeugkransystem aus Figur 1 in einem ersten Zustand,
Figur 8 das Fahrzeugkransystem 1 aus Figur 7 in einem veränderten Zustand,
Figur 9 das Fahrzeugkransystem 1 aus Figur 8 in einem veränderten Zustand,
Figur 10 das Fahrzeugkransystem 1 aus Figur 9 in einem veränderten Zustand,
Figur 11 das Fahrzeugkransystem 1 aus Figur 10 in einem veränderten Zustand und
Figur 12 das Fahrzeugkransystem 1 aus Figur 11 in einem veränderten Zustand.

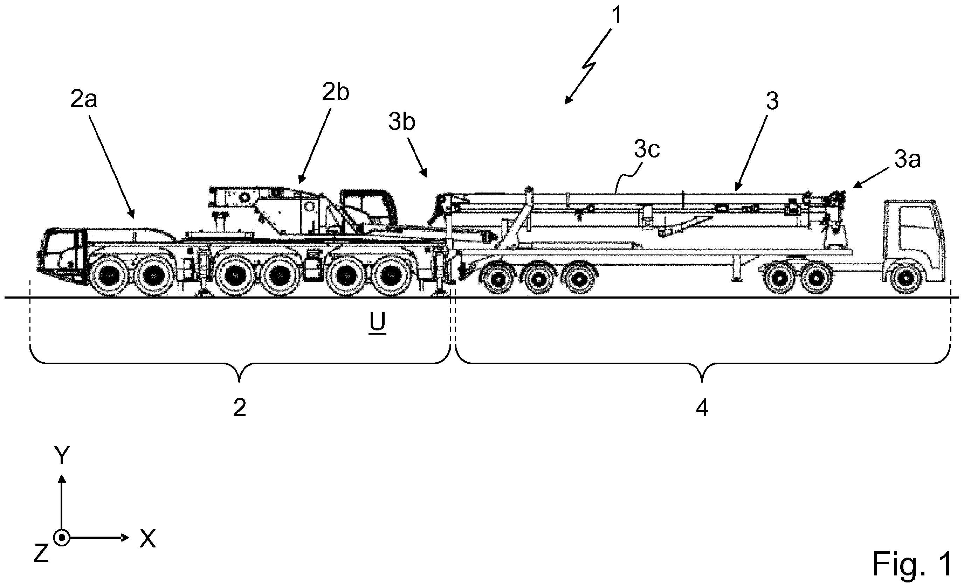

Figur 1 zeigt den Aufbau eines auf einem Untergrund U abgestellten erfindungsgemäßen Fahrzeugkransystems 1, welches einen Fahrzeugkran 2 mit einem von diesem lösbaren Anbauteil in der Gestalt seines Hauptauslegers 3 sowie ein erfindungsgemäßes Anbauteil Transportsystem 4 umfasst. Wie zu erkennen, ist der mit seinem Kopfende 3a vom restlichen Fahrzeugkran 2 abgewandte Hauptausleger 3 mit seinem dem Kopfende 3a gegenüberliegenden Fußende 3b von einem auf einem Unterwagen 2a des Fahrzeugkrans 2 drehbar angeordneten Oberwagen 2b gelöst und zum Zwecke seines vom Fahrzeugkran 2 getrennten Transports auf dem Anbauteil Transportsystem 4 abgelegt. Der Hauptausleger 3 ist in üblicher Weise hydraulisch teleskopierbar und verriegelbar aus einem Grundkasten 3c und hierin geführten Teleskopabschnitten ausgebildet.

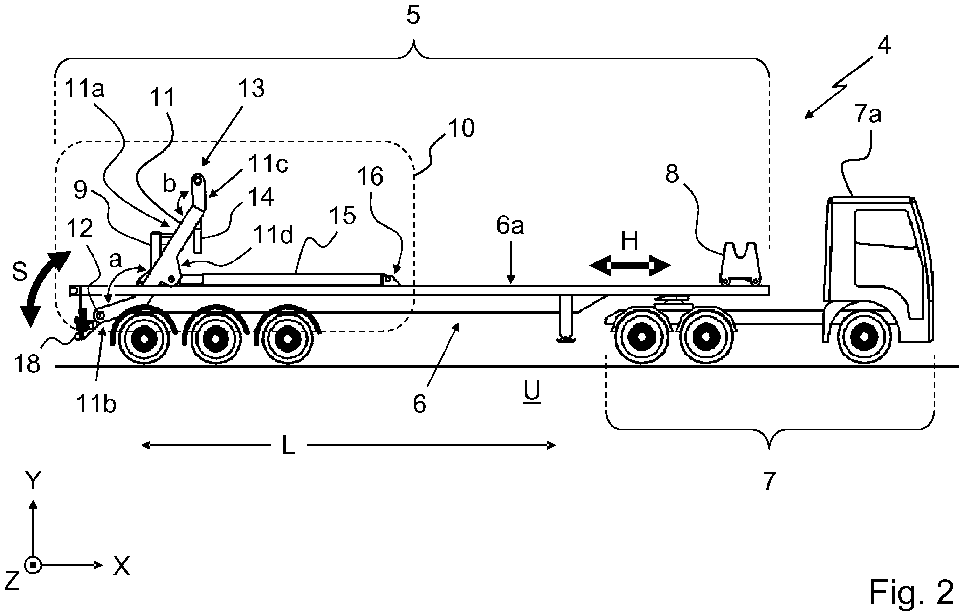

Figur 2 ist das von dem Fahrzeugkran 2 und seinem Hauptausleger 3 isoliert dargestellte Anbauteil Transportsystem 4 aus Figur 1 zu entnehmen. In dieser Darstellung wird deutlich, dass das Anbauteil Transportsystem 4 eine Anbauteil Transporteinheit 5 mit einer mobilen Transportvorrichtung 6 aufweist, welche der Aufnahme des hier nicht näher dargestellten Hauptauslegers 3 dient. Die Transportvorrichtung 6 ist vorliegend als Sattelauflieger ausgebildet, wobei deren Mobilität auf die Kopplung mit einem Zugfahrzeug 7 des Anbauteil Transportsystems 4 zurückgeht, das in Form eines Sattelschleppers mit der Transportvorrichtung 6 gekoppelt ist. Das Zugfahrzeug 7 weist typischerweise eine Fahrzeugkabine 7a auf, von der aus sich das aus Zugfahrzeug 7 und Anbauteil Transporteinheit 5 bestehende Gespann des Anbauteil Transportsystems 4 in Bezug auf den Transport eines Hauptauslegers 3 fahren lässt.

Auf der Transportvorrichtung 6 ist ein Ablagebock 8 angeordnet, welcher vorliegend auf einer dem Untergrund U abgewandten Ladefläche 6a der Transportvorrichtung 6 mittels einer parallel zu einer Längsrichtung L der Transportvorrichtung 6 erfolgenden und in entgegengesetzte Richtungen möglichen Verschiebebewegung H entlang der Ladefläche 6a verschieblich ausgestaltet ist. Der Ablagebock 8 ist dazu ausgebildet, einen auf der Transportvorrichtung 6 aufgenommenen Hauptausleger 3 im Bereich seines Kopfendes 3a abzustützen (siehe Figur 1). Weiterhin ist auf der Ladefläche 6a eine von dem Ablagebock 8 in Bezug auf die Längsrichtung L beabstandete Ablage 9 vorgesehen, wobei die Ablage 9 in einem von der Fahrzeugkabine 7a des Zugfahrzeugs 7 entfernten Bereich des hinteren Endes der Transportvorrichtung 6 gelegen ist, während sich der Ablagebock 8 in einem dem hinteren Ende gegenüberliegenden Bereich des vorderen Endes der Transportvorrichtung 6 befindet und insofern näher an der Fahrzeugkabine 7a gelegen ist. Die Ablage 9 ist dazu ausgebildet, einen auf der Transportvorrichtung 6 aufgenommenen Hauptausleger 3 im Bereich seines zwischen seinem Kopfende 3a und seinem Fußende 3b gelegenen Grundkastens 3c abzustützen (siehe Figur 1).

Erfindungsgemäß besitzt die Anbauteil Transporteinheit 5 eine Verladeanordnung 10, welche im Bereich der Ablage 9 und damit im Bereich des hinteren Endes der Transportvorrichtung 6 gelegen ist. Die Verladeanordnung 10 weist vorliegend zwei Verladearme 11 auf, von denen mit Bezug auf die Darstellung von Figur 2 nur der im Vordergrund stehende Verladearm 11 ersichtlich ist, während der sich vorliegend parallel hierzu erstreckende und senkrecht zur Blattebene hintere Verladearm 11 durch den im Vordergrund stehenden Verladearm 11 verdeckt ist. Während die Längsrichtung L der Transportvorrichtung 6 parallel zu einer Horizontalrichtung X verläuft, erstrecken sich die beiden Verladearme 11 in Bezug auf eine Hochrichtung Y im Wesentlichen oberhalb der Ladefläche 6a, während sie parallel zu einer Vertikalrichtung Z voneinander beabstandet sind. Beide Verladearme 11 sind über eine gemeinsame oder jeweils eine eigene Drehachse 12 unterhalb der Ladefläche 6 an der Transportvorrichtung 6 verschwenkbar angelenkt. Die Verladeanordnung 10 dient dem Auf- und Abladen eines hier nicht näher gezeigten Hauptauslegers 3, indem die beiden Verladearme 11 mittels einer aktiven und in entgegengesetzte Richtungen mögliche Schwenkbewegung S um die Drehachse/n 12 herum verschwenkt werden. Dabei sind die freien Tragenden 13 jedes Verladearms 11 zur zumindest indirekten zeitlichen Kopplung mit einem Hauptausleger 3 vorgesehen, was vorliegend unter Einsatz wenigstens eines Haltemittels 14 durchführbar ist. Hierzu ist besagtes Haltemittel 14 lösbar zwischen den Tragenden 13 der beiden Verladearme 11 angeordnet oder anordenbar. Auf diese Weise kann durch das Haltemittel 14 beispielsweise eine Art Schlinge zwischen den Verladearmen 11 ausgebildet sein. Um eine lösbare Verbindung zwischen Haltemittel 14 und Hauptausleger 3 herzustellen, kann dieser beispielsweise mit seinem Grundkasten 3c in die aus dem Haltemittel 14 gebildete Schlinge abgelegt werden. Alternativ oder ergänzend hierzu kann der Hauptausleger 3, insbesondere dessen Grundkasten 3c, ein beispielsweise ringförmiges Verbindungsmittel wie etwa eine angeschweißte oder in sonstiger Weise an diesem angeordnete Öse besitzen, um ausschließlich über diese oder in Kombination mit einem teilweisen Umgreifen des Grundkastens 3c eine lösbare Verbindung zwischen dem Haltemittel 14 und dem Hauptausleger 3 herzustellen. Hierbei ist das Haltemittel 14 biegeschlaff als Band, Gurt, Seil oder Kette ausgebildet.

Die aktive Ausführung der Schwenkbewegung S der Verladearme 11 erfolgt über Linearantriebe 15, von denen aufgrund der Darstellung von Figur 2 ebenfalls nur der im Vordergrund gelegene Linearantrieb 15 ersichtlich ist. Jeder dieser beiden Linearantriebe 15 ist zwischen der Transportvorrichtung 6 und einem der beiden Verladearme 11 eingegliedert. Bei den Linearantrieben 15 handelt es sich bevorzugt um Hydraulikzylinder. Ein Einsatz von elektrischen Antrieben ist ebenfalls denkbar.

Mit Blick auf den im Vordergrund stehenden und in seiner Form dem verdeckten Verladearm 11 im Wesentlichen identischen Verladearme 11 wird deutlich, dass diese jeweils einen geraden Mittenabschnitt 11a besitzen. Jeder dieser Mittenabschnitte 11a erstreckt sich dabei zwischen zwei in dieselbe Richtung abgewinkelten Endabschnitten 11b, 11c des zugehörigen Verladearms 11. Dabei schließen die Endabschnitte 11b, 11c und der Mittenabschnitt 11a eines jeden Verladearms 11 jeweils einen Winkel a, b zwischen sich ein. Bevorzugt kann der zwischen dem im Bereich der Drehachse 12 gelegenen unteren Endabschnitt 11b und dem Mittenabschnitt 11a eingeschlossene erste Winkel a dem zwischen dem im Bereich des Tragendes 13 gelegenen oberen Endabschnitt 11c und dem Mittenabschnitt 11a eingeschlossenen zweiten Winkel b entsprechen, wie beispielhaft ersichtlich. Vorliegend betragen die beiden Winkel a, b jeweils von 165° bis 135°, bevorzugt von 155° bis 145°, beispielsweise 150°. Dabei können die beiden Winkel a, b identisch oder voneinander abweichend ausgebildet sein.

Jeder Mittenabschnitt 11a der beiden Verladearme 11 weist einen Kopplungsbereich 11d auf, welcher jeweils auf einer den Winkeln a, b abgewandten Seite des zugehörigen Verladearms 11 angeordnet ist. Demgegenüber weist die Transportvorrichtung 6 zwei auf ihrer Ladefläche 6a angeordnete Lager 16 auf, die jeweils im Wesentlichen in Ebene eines der beiden Verladearme 11 gelegen sind. Die beiden Linearantriebe 15 sind dabei so zwischen der Transportvorrichtung 6 und dem jeweils zugehörigen Verladearm 11 eingegliedert, dass diese über ein erstes Ende mit dem Kopplungsbereich 11d eines Verladearms 11 kraftübertragend verbunden sind, wohingegen deren dem ersten Ende gegenüberliegenden zweiten Enden jeweils mit einem der Lager 16 gekoppelt sind. In dieser Anordnung sind die beiden Endabschnitte 11b, 11c jedes Verladearms 11 zu einer dem zugehörigen Linearantrieb 15 abgewandten Seite hin abgewinkelt.

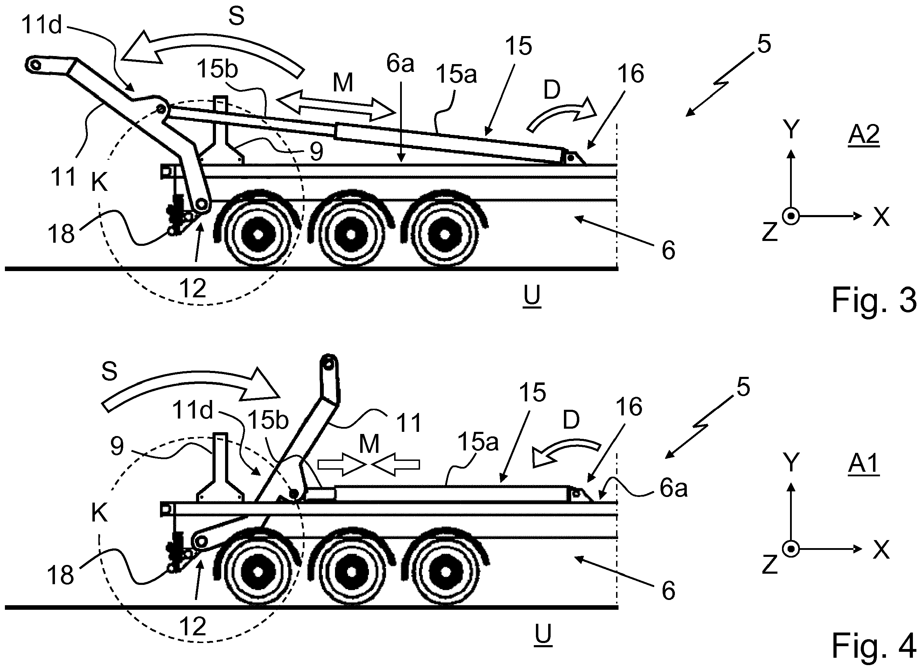

Die nachfolgend näher beschriebenen Figuren 3 bis 6 sind jeweils auf einen die Verladeanordnung 10 beinhaltenden Ausschnitt der Anbauteil Transporteinheit 5 beschränkt, der zur besseren Verdeutlichung der Funktionsweise der die Verladearme 11 und die Linearantriebe 15 beinhaltenden Verladeanordnung 10 jeweils den Bereich des hinteren Endes der Transportvorrichtung 6 zeigt.

Figur 3 ist ein maximal ausgeschwenkter Aufnahmezustand der beiden Verladearme 11 zu entnehmen, welcher vor der zeitlichen Kopplung eines hier nicht näher erkennbaren Hauptauslegers 3 eingenommen wird. Die Verladeanordnung 10 ist so ausgebildet und deren Linearantriebe 15 sind so ansteuerbar, dass deren Längenänderungen getrennt voneinander erfolgen können. Hierzu wird eine zumindest abschnittsweise innerhalb eines Zylinderrohrs 15a des jeweiligen Linearantriebs 15 gelagerte Kolbenstange 15b durch eine in entgegengesetzte Richtungen mögliche Linearbewegung M relativ zum zugehörigen Zylinderrohr 15a in dessen Längsrichtung verschoben. Auf diese Weise ist es möglich, die auf einer Längenänderung der Linearantriebe 15 basierenden Schwenkbewegungen S der Verladearme 11 getrennt voneinander vorzunehmen. Im Ergebnis sind die Schwenkbewegungen S des jeweiligen Verladearms 11 sowohl synchron zueinander als auch voneinander unabhängig ausführbar.

Vorliegend wurden die beiden Verladearme 11 aufgrund der Linearbewegungen M der beiden Linearantriebe 15 erkennbar um die Drehachse/n 12 herum verschwenkt. Aufgrund der dabei auf einer Kreisbahn K um die Drehlachse/n 12 herum rotierenden Kopplungsbereiche 11d der Verladearme 11 wird das mit diesen kraftübertragend verbundene erste Ende der Linearantriebe 15 entsprechend mitbewegt. Hierdurch wird deren erstes Ende derart gegenüber der Ladefläche 6a angehoben, dass der jeweilige Linearantrieb 15 eine diesen gegenüber der Ladefläche 6a anwinkelnde, um das zugehörige Lager 16 herumerfolgende, begrenzte Drehbewegung D vollzieht.

Figur 4 verdeutlicht den zur Figur 3 entgegengesetzten Verlauf der einzelnen Bewegungen der Verladeanordnung 10 in einen maximal eingeschwenkten Ablagezustand, der bei Aufnahme eines hier nicht näher gezeigten Hauptauslegers 3 auf die Transportvorrichtung 6 oder als Ruhezustand beispielsweise während des Verfahrens der Anbauteil Transporteinheit 5 eingenommen wird. Erkennbar wurden die Verladearme 11 über in entgegengesetzte Richtung erfolgte Schwenkbewegungen S um die Drehachse 12 herum wieder zurück verschwenkt, indem die Linearantriebe 15 jeweils über eine in entgegengesetzte Richtung erfolgte Linearbewegung M in ihrer Länge verkürzt wurden. In diesem Zusammenhang wurden die Kopplungsbereiche 11d der beiden Verladearme 11 erneut in entgegengesetzte Richtung auf der Kreisbahn K um die Drehachse 12 herum rotiert, so dass sich die beiden Linearantriebe 15 in einer parallel zur Ladefläche 6a der Transportvorrichtung 6 verlaufenden Ebene erstrecken.

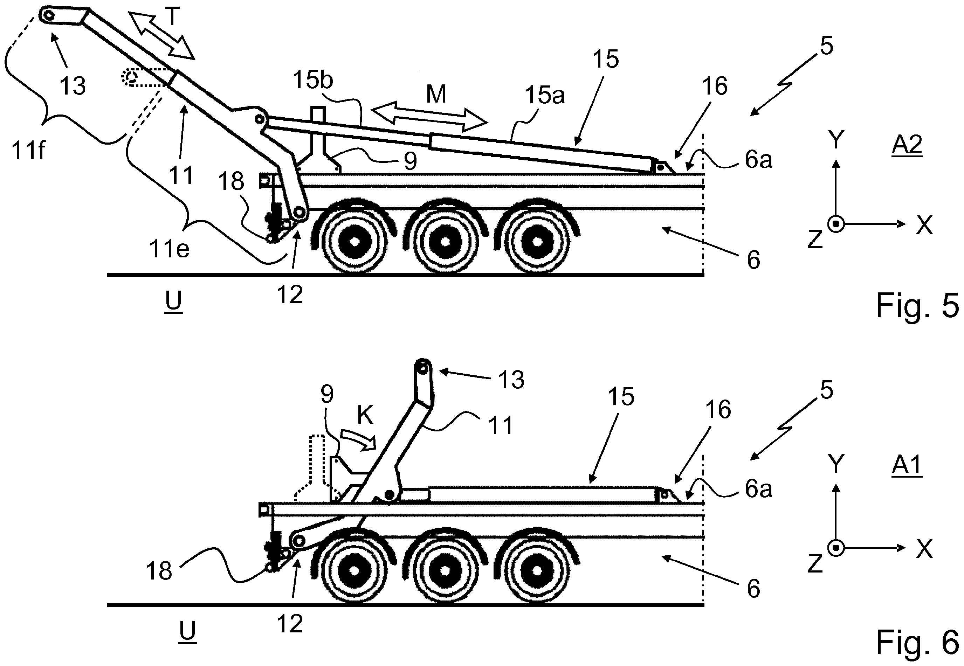

Figur 5 ist eine bevorzugte Weiterbildung der Verladearme 11 zu entnehmen. Erkennbar sind diese nunmehr zweigeteilt, indem diese jeweils ein an den Drehachsen 12 angelenktes unteres Armteil 11e und ein relativ zu diesem mit einer Teleskopierbewegung T in entgegengesetzte Richtungen verlagerbares oberes Armteil 11f aufweisen. Aufgrund dieser Zweiteilung der Verladearme 11 sind diese im Bereich des Mittenabschnitts 11a entsprechend teleskopierbar ausgebildet, so dass der Abstand zwischen der Drehachse 12 und dem freien Tragende 13 eines Verladearms 11 bei Bedarf anpassbar, insbesondere vergrößerbar und/oder verkleinerbar ist. Auf diese Weise können die Tragenden 13 der Verladearme 11 weiter zum Fußende 3b eines aufzunehmenden Hauptauseger 3 hin verlagert werden, um einen Überhang des Hauptauslegers 3 über das ihn untergreifende Haltemittel 14 hinaus in vorteilhafter Weise zu reduzieren. Die Teleskopierbewegung T der Verladearme 11 kann entweder gleichzeitig oder getrennt von dessen Schwenkbewegung S erfolgen.

Figur 6 zeigt eine weitere bevorzugte Weiterbildung der Ablage 9. Erkennbar ist die Ablage 9 mittels einer Klappbewegung K in entgegengesetzten Richtungen klappbar auf der Ladefläche 6a der Transportvorrichtung 6 angeordnet. Hierdurch ist es möglich, die Ablage 9 während der Zeiträume entsprechend abzuklappen, in denen sie nicht zur Ablage des Hauptauslegers 3 genutzt wird. Das Abklappen bewirkt, dass der ansonsten für die in Nutzstellung aufgerichtete Ablage 9 benötigte Raum zumindest teilweise frei wird, um beispielsweise die Verlagerung des Hauptauslegers 3 und/oder anderer Teile des Fahrzeugkrans 2 zu erleichtern. Insbesondere in den Momenten, in denen etwaige Störkanten des Hauptauslegers 3 und/oder anderer Teile des Fahrzeugkrans 2 ansonsten mit der Ablage 9 kollidieren würden, kann durch deren Abklappen der benötigte Hantier- und/oder Rangierraum freigegeben werden.

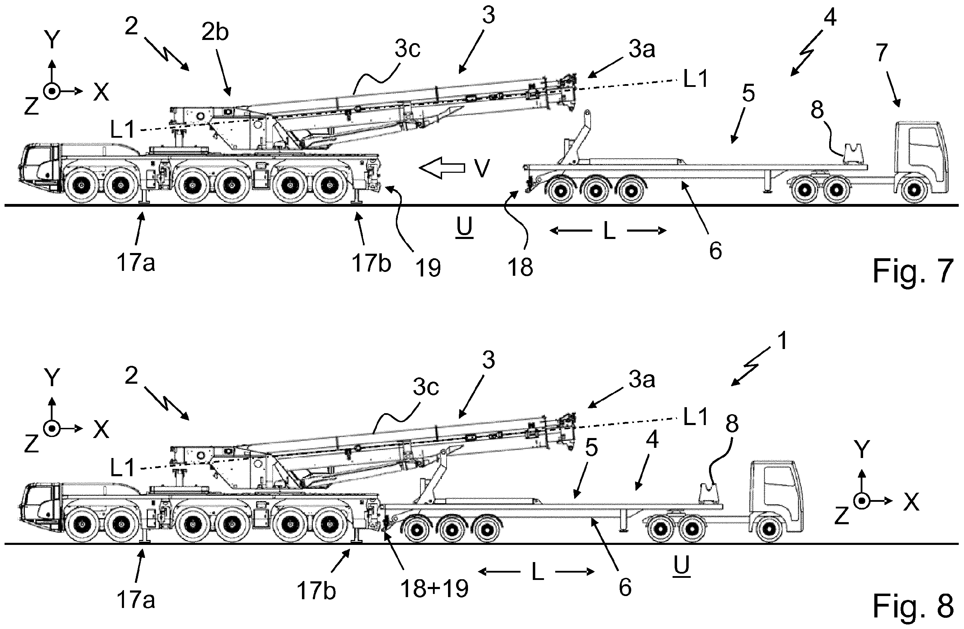

Die nachfolgend beschriebenen Figuren 7 bis 12 zeigen den Vorgang der Aufnahme des Hauptauslegers 3 des Fahrzeugkrans 2 im Detail:

Figur 7 ist der Fahrzeugkran 2 zu entnehmen, dessen Hauptausleger 3 beispielsweise zwecks Gewichtsreduktion von dem schwenkbaren Oberwagen 2b des Fahrzeugkrans 2 demontiert und separat transportiert werden soll. Entfernt zum Fahrzeugkran 2 ist das sich aus Anbauteil Transporteinheit 5 und Zugfahrzeug 7 zusammensetzende Anbauteil Transportsystem 4 bereitgestellt. Ersichtlich ist das Kopfende 3a des bereits zum hinteren Ende der Transportvorrichtung 6 der Anbauteil Transporteinheit 5 hin ausgerichteten Hauptauslegers 3 angehoben, während der Fahrzeugkran 2 durch Stützvorrichtungen 17a, 17b gegenüber dem Untergrund U abgestützt ist. Erkennbar ist der Hauptausleger 3 in diesem Zustand in seiner Längsrichtung L1 gegenüber der Längsrichtung L der Transportvorrichtung 6 beziehungsweise der Horizontalrichtung X leicht aufgewippt. In einem nächsten Schritt wird die Transportvorrichtung 6 durch das Zugfahrzeug 7 an den Fahrzeugkran 2 angenähert, wobei deren Längsrichtung X und die Längsrichtung L1 des Hauptauslegers 3 zueinander ausgerichtet sind. Dies meint, dass deren beider Längsrichtungen L, L1 im Wesentlichen in einer gemeinsamen, zwischen der Horizontalrichtung X und der Hochrichtung Z aufgespannten Ebene verlaufen. Hierzu wird die Transportvorrichtung 6 mittels einer Verfahrbewegung V so weit in Richtung Fahrzeugkran 2 bewegt, bis diese unter einem Abschnitt des Hauptauslegers 3 angeordnet ist.

Figur 8 zeigt das aus Fahrzeugkran 2 und Anbauteil Transportsystem 4 bestehende Fahrzeugkransystem 1. Ersichtlich wurde das Anbauteil Transportsystem 4 über dessen Verfahrbewegung V so nah an den Fahrzeugkran 2 herangeführt, bis deren Anbauteil Transporteinheit 5 mit dem Fahrzeugkran 2 gekoppelt werden konnte. Hierzu besitzt die Transportvorrichtung 6 eine Kopplungseinrichtung 18, welche mit einer korrespondierenden Kopplungseinrichtung 19 des Fahrzeugkrans 2 nunmehr lösbar verbunden ist (siehe auch Figur 7). Bei den beiden Kopplungseinrichtungen 18, 19 kann es sich beispielsweise um eine oder um Teile einer Anhängerkupplung handeln.

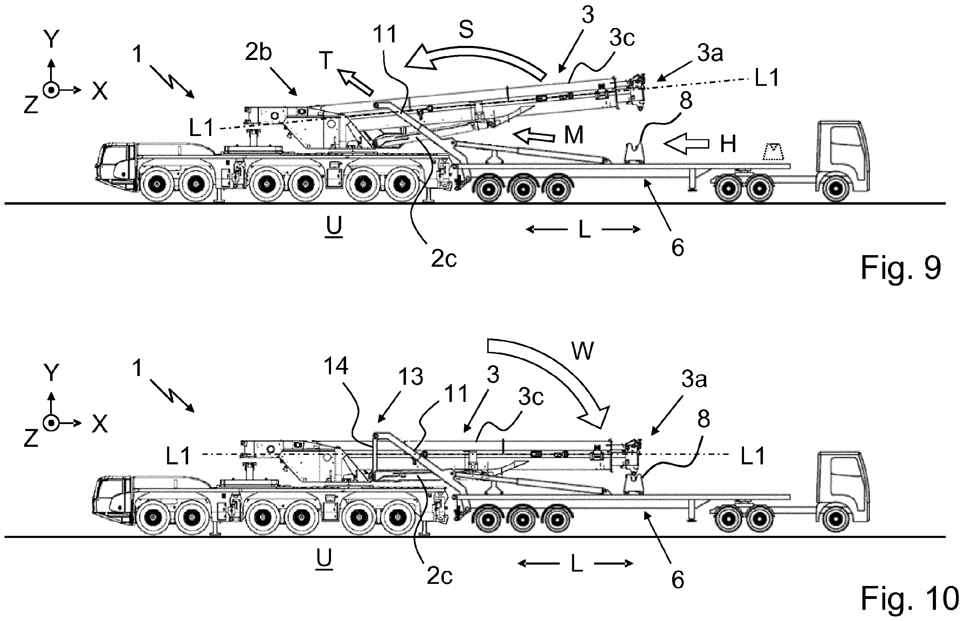

Figur 9 ist zu entnehmen, dass die Verladeanordnung 10 mittels einer auf einer Linearbewegung M der Linearantriebe 15 basierenden Schwenkbewegung S der Verladearme 11 auf die bevorstehende Aufnahme des Hauptauslegers 3 vorbereitet wurde. Weiterhin wurden die Verladearme 11 mittels einer Teleskopierbewegung T in ihrer Erstreckung verlängert, wodurch deren freien Tragenden 13 möglichst weit in Richtung des schwenkbaren Oberwagens 2b des Fahrzeugkrans 2 verlagert wurden. Zuvor oder im Anschluss wurde der Ablagebock 8 mittels einer Verschiebebewegung H in Richtung des Fahrzeugkrans 2 verschoben, so dass dieser nunmehr exakt unterhalb des Kopfendes 3a des Hauptauslegers 3 angeordnet ist. Alternativ oder ergänzend hierzu kann selbstverständlich auch das Kopfende 3a entsprechend austeleskopiert werden, um die erforderliche relative Lage zwischen Kopfende 3a und Ablagebock 8 zu erhalten.

Figur 10 verdeutlicht das darauffolgende Abwippen des Hauptauslegers 3 des Fahrzeugkrans 2 mittels einer Wippbewegung W in Richtung Transportvorrichtung 6. Erkennbar ist die Wippbewegung W des Hauptauslegers 3 so weit erfolgt, dass dessen Kopfende 3a nunmehr auf dem Ablagebock 8 der Transportvorrichtung 6 abgestützt ist. Die Wippbewegung W erfolgte dabei durch Betätigung eines Wippzylinders 2c des Fahrzeugkrans 2, welcher in üblicher Weise zwischen dem schwenkbaren Oberwagen 2b und dem Hauptausleger 3 angeordnet ist. Zuvor oder im Anschluss wurde das Haltemittel 14 so zwischen den Tragenden 13 der beiden Verladearme 11 angeordnet, dass es sich beispielsweise unterhalb des Grundkastens 3c des Hauptauslegers 3 erstreckt, um eine lösbare Verbindung zwischen Hauptausleger 3 und Haltemittel 14 zu etablieren. Alternativ oder ergänzend hierzu kann das Haltemittel 14 auch durch ein - hier nicht näher ersichtliches - bevorzugt ringförmiges Verbindungsmittel geführt sein, wie beispielsweise eine Öse, das hierfür an geeigneter Stelle an dem Grundkasten 3c des Hauptauslegers 3 angeordnet ist. In vorteilhafter Weise kann besagtes ringförmiges Verbindungsmittel hierzu beispielsweise an einer Oberseite des Grundkastens 3c gelegen sein. Bevorzugt kann das Haltemittel 14 zumindest bereichsweise mit einer rutschhemmenden Oberfläche ausgestattet sein, welche an einem dem Hauptausleger 3 zugewandten Bereich angeordnet ist.

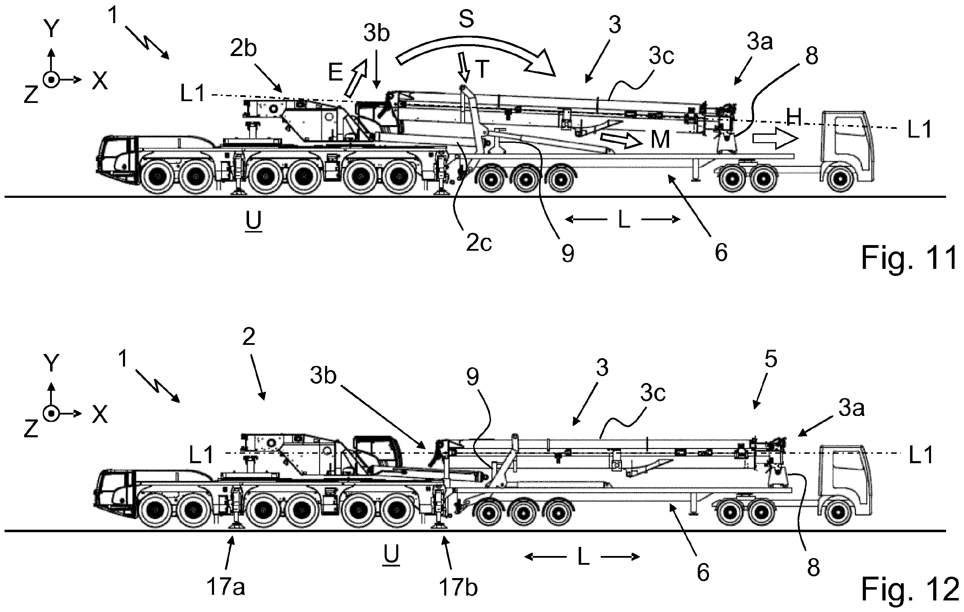

Figur 11 ist die Trennung des Hauptauslegers 3 von dem Fahrzeugkran 2 und dessen beginnende Aufnahme auf die Transportvorrichtung 6 zu entnehmen. Ersichtlich wurde der Wippzylinder 2c zwischenzeitlich von dem Hauptausleger 3 getrennt, beispielsweise durch Demontage eines entsprechenden Bolzens. Weiterhin wurde das Fußende 3b des Hauptauslegers 3 in nicht näher gezeigter Weise von dem Oberwagen 2b demontiert, so dass der Hauptausleger 3 nun vom dem Fahrzeugkran 2 getrennt werden kann. Hierzu wurde beispielsweise ein entsprechender Bolzen demontiert. Um die Verbindung zwischen Oberwagen 2b und Hauptausleger 3 im Bereich seines Fußendes 3b für die Demontage zu entlasten, kann dieses bereits mittels einer begrenzten Schwenkbewegung S der Verladearme 11 angehoben werden. Sofern noch nicht geschehen, müssen noch etwaige Versorgungsleitungen zwischen Fahrzeugkran 2 und Hauptausleger 2 an den dafür vorgesehenen Kupplungen getrennt werden.

Mittels einer auf einer in entgegengesetzte Richtung erfolgenden Linearbewegung M der Linearantriebe 15 wird nun die vorherige Schwenkbewegung S ebenfalls in ihrer Richtung umgekehrt, so dass das Fußende 3b des Hauptauslegers 3 durch eine resultierende Entkopplungsbewegung E aus der zugehörigen Lagerung am Oberwagen 2b herausgehoben wird. Zeitgleich oder unabhängig von der Schwenkbewegung S der Verladearme 11 erfolgt deren Teleskopierbewegung T, so dass diese in ihrer Erstreckung wieder entsprechend verkürzt werden. Aufgrund des nunmehr nur noch über den Ablagebock 8 und das Haltemittel 14 gelagerten Hauptauslegers 3 ist es nun möglich, eine sich zu einer kinematischen Kette der einzelnen Bewegungen zusammensetzende Auflade Bewegung A1 zu bewirken (siehe auch Figur 4). Hierzu werden durch die Linearbewegungen M der Linearantriebe 15 die beiden Verladearme 11 weiter mittels der daraus resultierenden Schwenkbewegungen S verschwenkt, wobei der Ablagebock 8 zwangsläufig über dessen passive Verschiebebewegung H parallel zur Längsrichtung L der Transportvorrichtung 6 in Richtung Fahrzeugkabine 7a des Zugfahrzeugs 7 verschoben wird. Im Ergebnis stellt die Auflade Bewegung A1 eine relativ zur Transportvorrichtung 6 erfolgende, kombinierte translatorische sowie begrenzt rotatorische Bewegung des Hauptauslegers 3 dar, welche diesen vom Fahrzeugkran 2 weg führt, bis dieser auf die Transportvorrichtung 6 aufgenommen und auf der Ablage 9 der Transportvorrichtung 6 abgelegt, insbesondere abgestützt, ist. Durch eine bewegliche Anordnung des Haltemittels 14 kann dieses sich während der Schwenkbewegungen S der Verladearme 11 spannungsfrei relativ zu den Tragenden 13 ausrichten.

Figur 12 stellt den auf der Transportvorrichtung 6 aufgenommenen Zustand des Hauptauslegers 3 dar, welcher im Bereich seines Fußendes 3b nunmehr einerseits auf der Ablage 9 und andererseits weiterhin auf dem Ablagebock 8 abgestützt ist. Zum Transport des Hauptauslegers 3 wird dieser zunächst in nicht näher gezeigter Weise auf der Transportvorrichtung 6 gesichert. Anschließend wird die Anbauteil Transporteinheit 5 wieder von dem restlichen Fahrzeugkran 2 entkoppelt, welcher nach Aufhebung seiner Abstützung durch Anheben der Stützvorrichtungen 17a, 17b ebenfalls aus eigenem Antrieb heraus von seinem Hauptausleger 3 getrennt verfahrbar ist.

Die Verbindung des Hauptauslegers 3 mit seinem Fahrzeugkran 2 erfolgt dann in sinngemäß umgekehrter Reihenfolge über eine entsprechende Ablade Bewegung A2 (siehe Figur 3), wobei insbesondere die voneinander unabhängige Ansteuerung der beiden Verladearme 11 in Kombination mit der im abgestützten Zustand des Hauptauslegers 3 am Ablagebock 8 zumindest begrenzt möglichen Beweglichkeit, insbesondere Verdrehbarkeit, seines Kopfendes 3a auf dem Ablagebock 8 sowohl bei der Auflade Bewegung A1 als auch bei der Ablade Bewegung A2 dazu genutzt werden kann, etwaige Fluchtungsfehler und/oder Winkelversätze zwischen dem Fußende 3b des Hauptauslegers 3 und der zugehörigen Kopplungsstelle am Oberwagen 2b des Fahrzeugkrans 2 auszugleichen.

Bei der Transportvorrichtung 6 kann es sich beispielsweise um einen Sattelauflieger, einen Auflieger, einen Tieflader oder einen Anhänger handeln, um nur einige der möglichen Ausgestaltungsformen zu benennen.

### Bezugszeichenliste

- 1: Fahrzeugkransystem
- 2: Fahrzeugkran
- 2a: Unterwagen
- 2b: Oberwagen
- 2c: Wippzylinder
- 3: Hauptausleger
- 3a: Kopfende
- 3b: Fußende
- 4: Anbauteil Transportsystem
- 5: Anbauteil Transporteinheit
- 6: Transportvorrichtung
- 6a: Ladefläche
- 7: Zugfahrzeug
- 7a: Fahrzeugkabine
- 8: Ablagebock
- 9: Ablage
- 10: Verladeanordnung
- 11: Verladearm
- 11a: Mittenabschnitt
- 11b: Endabschnitt, unten
- 11c: Endabschnitt, oben
- 11d: Kopplungsbereich
- 11e: Armteil, unten
- 11f: Armteil, oben
- 12: Drehachse
- 13: Tragende
- 14: Haltemittel
- 15: Linearantrieb
- 15a: Zylinderrohr
- 15b: Kolbenstange
- 16: Lager
- 17a: Stützvorrichtung
- 17b: Stützvorrichtung
- 18: Kopplungseinrichtung
- 19: Kopplungseinrichtung

- a: Winkel
- A1: Auflade Bewegung
- A2: Ablade Bewegung
- b: Winkel
- D: Drehbewegung
- E: Entkopplungsbewegung
- H: Verschiebebewegung
- K: Kreisbahn
- L: Längsrichtung von 6
- L1: Längsrichtung von 3
- M: Linearbewegung
- S: Schwenkbewegung
- T: Teleskopierbewegung
- U: Untergrund
- V: Verfahrbewegung
- W: Wippbewegung
- X: Horizontalrichtung
- Y: Vertikalrichtung

## Patentansprüche

1. Fahrzeugkransystem (1), umfassend einen Fahrzeugkran (2) mit einem lösbaren Anbauteil (3), insbesondere Hauptausleger, sowie eine zur Aufnahme des von dem Fahrzeugkran (2) gelösten Anbauteils (3) ausgebildete Anbauteil Transporteinheit (5) mit einer mobilen Transportvorrichtung (6) für den Transport des Anbauteils (3), wobei an der Transportvorrichtung (6) wenigstens ein Verladearm (11) angeordnet ist, an einem freien Tragende (13) des Verladearms (11) ein aufzunehmendes oder bereits aufgenommenes Anbauteil (3) koppelbar ist und der Verladearm (11) derart verschwenkbar an der Transportvorrichtung (6) angeordnet ist, dass ein aufzuladendes beziehungsweise abzuladendes Anbauteil (3) auf die Transportvorrichtung (6) oder von der Transportvorrichtung (6) herunter bewegbar ist, mit einem auf der Transportvorrichtung (6) angeordneten Ablagebock (8), welcher zur Abstützung des Anbauteils (3) ausgebildet ist, insbesondere im Bereich eines Kopfendes (3a) des Anbauteils (3), **dadurch gekennzeichnet dass** der Ablagebock (8) parallel zu einer Längsrichtung (L) der Transportvorrichtung (6) verschieblich angeordnet ist.

2. Fahrzeugkransystem (1) nach Anspruch 1, **gekennzeichnet durch** eine auf der Transportvorrichtung (6) angeordnete Ablage (9), welche zur Abstützung eines Anbauteils (3) ausgebildet ist, insbesondere in einem Bereich zwischen einem Kopfende (3a) und einem Fußende (3b) ausgebildet ist,

3. Fahrzeugkransystem (1) nach Anspruch 1 oder 2, **gekennzeichnet durch** eine Ausbildung des Ablagebocks (8) derart, dass ein über sein Kopfende (3a) auf diesem abstützbarer Hauptausleger (3) im abgestützten Zustand auf dem Ablagebock (8) beweglich, insbesondere in einer vertikalen und/oder horizontalen Ebene verschwenkbar, ist.

4. Fahrzeugkransystem (1) nach einem der Ansprüche 1 bis 3, **gekennzeichnet durch** eine verschwenkbare Anordnung des Verladearms (11) an der Transportvorrichtung (6) derart, dass ein aufzuladendes beziehungsweise abzuladendes Anbauteil (3) auf einem Pfad mit einem Bewegungsanteil in eine Vertikalrichtung (Y) und eine Horizontalrichtung (X) bewegbar ist.

5. Fahrzeugkransystem (1) nach einem der Ansprüche 1 bis 4, **dadurch gekennzeichnet, dass** ein mit seinem Kopfende (3a) auf dem Ablagebock (8) abgestütztes und mit dem freien Tragende (13) des wenigstens einen Verladearms (11) zumindest indirekt gekoppeltes Anbauteil (3) durch eine Schwenkbewegung (S) des Verladearms (11) in eine
a) relativ zur Transportvorrichtung (6) erfolgende, kombinierte translatorische sowie begrenzt rotatorische Auflade Bewegung (A1) hin zur Ablage (9), insbesondere weg vom zugehörigen Fahrzeugkran (2),
oder in eine
b) relativ zur Transportvorrichtung (6) erfolgende, kombinierte translatorische sowie begrenzt rotatorische Ablade Bewegung (A2) weg von der Ablage (9), insbesondere hin zum zugehörigen Fahrzeugkran (2),
versetzbar ist.

6. Fahrzeugkransystem (1) nach einem der Ansprüche 1 bis 5, **gekennzeichnet durch** zwei voneinander beabstandete Verladearme (11), wobei die Schwenkbewegungen (S) der Verladearme (11) synchron zueinander und/oder voneinander unabhängig ausführbar sind.

7. Fahrzeugkransystem (1) nach einem der Ansprüche 1 bis 6, **gekennzeichnet durch** einen zwischen dem wenigstens einen Verladearm (11) und der Transportvorrichtung (6) angeordneten Linearantrieb (15), insbesondere Hydraulikzylinder, wobei eine Schwenkbewegung (S) des Verladearms (11) auf einer Längenänderung des Linearantriebs (15) basiert.

8. Fahrzeugkransystem (1) nach Anspruch 7, **dadurch gekennzeichnet, dass** die Endabschnitte (11b, 11c) zu einer dem Linearantrieb (15) abgewandten Seite des Verladearms (11) hin abgewinkelt sind.

9. Fahrzeugkransystem (1) nach einem der Ansprüche 1 bis 8, **dadurch gekennzeichnet, dass** der wenigstens eine Verladearm (11) teleskopierbar ausgebildet ist.

10. Verfahren zur Aufnahme eines von einem Fahrzeugkran (2) lösbaren Anbauteils in Gestalt dessen Hauptauslegers (3) auf eine Transportvorrichtung (6) eines Fahrzeugkransystems (1), nach einem der Ansprüche 1 bis 9 umfassend die folgenden Schritte:
- Bereitstellen der Anbauteil Transporteinheit (5) in Verlängerung des Fahrzeugkrans (2);
- Ausrichten einer Längsrichtung (L1) des Hauptauslegers (3) zu einer Längsrichtung (L) der Transportvorrichtung (6);
- Ablegen eines Kopfendes (3a) des Hauptauslegers (3) auf einem Ablagebock (8) der Transportvorrichtung (6) durch Abwippen des Hauptauslegers (3) über dessen Wippzylinder (2c);
- Entkoppeln des Wippzylinders (2c) von dem Hauptausleger (3);
**gekennzeichnet durch** folgende Schritte:
- Verschwenken zweier Verladearme (11) der Anbauteil Transporteinheit (5), bis beide Verladearme (11) mit ihren freien Tragenden (13) in den Bereich eines zwischen Kopfende (3a) und Fußende (3b) gelegenen Auslegerabschnitts des Hauptauslegers (3) ragen;
- Anordnen eines Haltemittels (14) zwischen den Tragenden (13) der beiden Verladearme (11) derart, dass sich das Haltemittel (14) bis zu einem Grundkasten (3c) des Hauptauslegers (3) erstreckt, insbesondere unterhalb des Grundkastens (3c) des Hauptauslegers (3) hindurch erstreckt;
- Herstellen einer lösbaren Verbindung zwischen Haltemittel (14) und Grundkasten (3c), insbesondere durch zumindest teilweises Umgreifen des Grundkasten (3c) mit dem Haltemittel (14) von einer Unterseite her;
- Verschwenken der beiden Verladearme (11) derart, dass der Hauptausleger (3) zumindest einseitig über das, insbesondere den Grundkasten (3c) des Hauptauslegers (3) von der Unterseite her zumindest teilweise umgreifende, Haltemittel (14) angehoben und so eine lösbare Verbindung zwischen dem Fahrzeugkran (2) und dem Hauptausleger (3) zumindest teilweise entlastet wird;
- Trennen von Versorgungsleitungen zwischen Fahrzeugkran (2) und seinem Hauptausleger (3);
- Lösen der Verbindung zwischen Hauptausleger (3) und Fahrzeugkran (2);
- Verschwenken der beiden Verladearme (11) derart, bis der über den parallel zur Längsrichtung (L) der Transportvorrichtung (6) verschieblichen Ablagebock (8) abgestützte Hauptausleger (3) durch eine relativ zur Transportvorrichtung (6) erfolgende, kombinierte translatorische sowie begrenzt rotatorische Auflade Bewegung (A1) vom Fahrzeugkran (2) weg auf die Transportvorrichtung (6) aufgenommen und auf einer Ablage (9) der Transportvorrichtung (6) abgelegt wird.

11. Verfahren nach Anspruch 10, **dadurch gekennzeichnet, dass** vor der Auflade Bewegung (A1) oder vor einem der Auflade Bewegung (A1) vorangehenden Schritte der Fahrzeugkran (2) abgestützt wird, insbesondere gegenüber einem Untergrund (U).

12. Verfahren nach Anspruch 10 oder 11, **dadurch gekennzeichnet, dass** vor der Auflade Bewegung (A1) oder vor einem der Auflade Bewegung (A1) vorangehenden Schritte die Anbauteil Transporteinheit (5) mit dem Fahrzeugkran (2) gekoppelt wird, wobei zum Transport des auf der Transportvorrichtung (6) aufgenommenen, insbesondere gesicherten, Hauptauslegers (3) bei Bedarf eine zuvor erfolgte Abstützung des Fahrzeugkrans (2) aufgehoben und die Anbauteil Transporteinheit (5) von dem restlichen Fahrzeugkran (2) entkoppelt wird.

13. Verfahren zum Verbinden eines auf einer Transportvorrichtung (6) eines Fahrzeugkransystems (1), nach einem der Ansprüche 1 bis 9 aufgenommenen Hauptauslegers (3), welcher mit seinem Kopfende (3a) auf einem Ablagebock (8) und mit einem zwischen dem Kopfende (3a) und seinem diesem gegenüberliegenden Fußende (3b) gelegenen Grundkasten (3c) auf einer Ablage (9) abgestützt ist, mit einem zugehörigen Fahrzeugkran (2), umfassend die folgenden Schritte:
- Bereitstellen der Anbauteil Transporteinheit (5) mit dem aufgenommenen Anbauteil (3) im Bereich des Fahrzeugkrans (2) derart, dass der Hauptausleger (3) mit seinem Fußende (3b) voran auf eine mit dessen Fußende (3b) korrespondierende Kopplungsstelle des Fahrzeugkrans (2) hin ausgerichtet wird;
**gekennzeichnet durch** die Schritte:
- Verschwenken zweier Verladearme (11) der Anbauteil Transporteinheit (5) derart, bis der Hauptausleger (3) durch ein zwischen den Tragenden (13) der Verladearme (11) bereits angeordnetes sowie, insbesondere durch Umgreifen des Grundkastens (3a) von einer Unterseite her, lösbar mit dem Grundkasten (3a) verbundenes oder zuvor anzuordnendes sowie, insbesondere durch Umgreifen des Grundkastens (3a) von einer Unterseite her, lösbar mit dem Grundkasten (3a) zu verbindendes Haltemittel (14) von der Ablage (9) der Transportvorrichtung (6) angehoben und mit seinem Fußende (3b) voran durch eine auf Basis von Schwenkbewegungen (S) der Verladearme (11) relativ zur Transportvorrichtung (6) erfolgende, kombinierte translatorische sowie begrenzt rotatorische Ablade Bewegung (A2) weg von der Ablage (9) zumindest teilweise zum Fahrzeugkran (2) hin bewegt wird, wobei der Ablagebock (8) parallel zu einer Längsrichtung (L) der Transportvorrichtung (6) verschoben wird;
- bedarfsweises Ausrichten des Fußendes (3b) des Hauptauslegers (3) gegenüber einer korrespondierenden Kopplungsstelle des Fahrzeugkrans (2) durch synchrone und/oder voneinander unabhängige Schwenkbewegungen (S) der Verladearme (11);
- Verbinden des Anbauteils (3) mit dem Fahrzeugkran (2);
- Verschwenken der beiden Verladearme (11) derart, bis das lösbar mit dem Grundkasten (3c) des Hauptauslegers (3) verbundene Haltemittel (14) entspannt wird;
- Ablösen des Haltemittels (14) von den Tragenden (13) der Verladearme (11);
- Verbinden von Versorgungsleitungen zwischen Fahrzeugkran (2) und seinem Hauptausleger (3);
- vorheriges oder anschließendes Verbinden eines Wippzylinders (2c) des Fahrzeugkrans (2) mit dem Hauptausleger (3).

14. Verfahren nach Anspruch 13, **dadurch gekennzeichnet, dass** vor der Ablade Bewegung (A2) oder vor einem der Ablade Bewegung (A2) vorangehenden Schritte der Fahrzeugkran (2) abgestützt wird, insbesondere gegenüber einem Untergrund (U).

15. Verfahren nach Anspruch 13 oder 14, **dadurch gekennzeichnet, dass** vor der Ablade Bewegung (A2) oder vor einem der Ablade Bewegung (A2) vorangehenden Schritte die Anbauteil Transporteinheit (5) mit dem Fahrzeugkran (2) gekoppelt wird, wobei zum Fortbewegen und/oder Einsatz des Fahrzeugkrans (2) bei Bedarf eine zuvor erfolgte Abstützung aufgehoben und die Anbauteil Transporteinheit (5) von dem restlichen Fahrzeugkran (2) entkoppelt wird.

## Claims

1. Mobile crane system (1) comprising a mobile crane (2) having a detachable attachment part (3), in particular a main boom, and an attachment part transport unit (5) which is designed to receive the attachment part (3) released from the mobile crane (2) and has a movable transport device (6) for transporting the attachment part (3), wherein at least one loading arm (11) is arranged on the transport device (6), an attachment part (3), which is to be received or is already received, can be coupled on a free supporting end (13) of the loading arm (11), and the loading arm (11) is pivotably arranged on the transport device (6) in such a way that an attachment part (3) to be loaded or unloaded is movable on the transport device (6) or downwards from the transport device (6),comprising a deposition support (8) which is arranged on the transport device (6) and is designed for supporting the attachment part (3), in particular in the region of a head end (3a) of the attachment part (3), **characterized in that** the deposition support (8) is arranged so as to be displaceable in parallel with a longitudinal direction (L) of the transport device (6).

2. Mobile crane system (1) according to claim 1, **characterized by** a shelf (9) arranged on the transport device (6), which is designed to support an attachment part (3), in particular is formed in a region between a head end (3a) and a foot end (3b),

3. Mobile crane system (1) according to claim 1 or 2, **characterized by** a design of the deposition support (8) in such a way that a main boom (3), which can be supported thereon via its head end (3a), is movable on the deposition support (8), in particular pivotable in a vertical and/or horizontal plane, in the supported state.

4. Mobile crane system (1) according to any of claims 1 to 3, **characterized by** a pivotable arrangement of the loading arm (11) on the transport device (6) in such a way that an attachment part (3) to be loaded or unloaded is movable on a path having a movement component in a vertical direction (Y) and a horizontal direction (X).

5. Mobile crane system (1) according to any of claims 1 to 4, **characterized in that** an attachment part (3) which is supported by its head end (3a) on the deposition support (8) and is at least indirectly coupled to the free supporting end (13) of the at least one loading arm (11), can be set, by a pivot movement (S) of the loading arm (11), into a
a) combined translational and limitedly rotational loading movement (A1), taking place relative to the transport device (6), towards the shelf (9), in particular away from the associated mobile crane (2), or into a
b) combined translational and limitedly rotational unloading movement (A2), taking place relative to the transport device (6), away from the shelf (9), in particular towards the associated mobile crane (2).

6. Mobile crane system (1) according to any of claims 1 to 5, **characterized by** two mutually spaced loading arms (11), it being possible for the pivot movements (S) of the loading arms (11) to be carried out synchronously with respect to one another and/or independently of one another.

7. Mobile crane system (1) according to any of claims 1 to 6, **characterized by** a linear drive (15), in particular hydraulic cylinder, arranged between the at least one loading arm (11) and the transport device (6), a pivot movement (S) of the loading arm (11) being based on a change in length of the linear drive (15).

8. Mobile crane system (1) according to claim 7, **characterized in that** the end portions (11b, 11c) are angled towards a side of the loading arm (11) facing away from the linear drive (15).

9. Mobile crane system (1) according to any of claims 1 to 8, **characterized in that** the at least one loading arm (11) is designed so as to be telescopic.

10. Method for receiving an attachment part, which is releasable from a mobile crane (2), in the form of its main boom (3), on a transport device (6) of a mobile crane system (1) according to any of claims 1 to 9, comprising the following steps:
- providing the attachment part transport unit (5) in an extension of the mobile crane (2);
- aligning a longitudinal direction (L1) of the main boom (3) to a longitudinal direction (L) of the transport device (6);
- depositing a head end (3a) of the main boom (3) on a deposition support (8) of the transport device (6) by luffing off the main boom (3) via its luffing cylinder (2c);
- decoupling the luffing cylinder (2c) from the main boom (3);
**characterized by** the following steps:
- pivoting two loading arms (11) of the attachment part (5) until both loading arms (11) protrude with their free supporting ends (13) into the region of a boom portion of the main boom (3) located between the head end (3a) and foot end (3b);
- arranging a holding means (14) between the supporting ends (13) of the two loading arms (11) such that the holding means (14) extends up to a base box (3c) of the main boom (3), in particular extends below the base box (3c) of the main boom (3);
- establishing a releasable connection between the holding means (14) and base box (3c), in particular by at least partially encompassing the base box (3c) with the holding means (14) from an underside,
- pivoting the two loading arms (11) in such a way that the main boom (3) is raised at least on one side by means of the holding means (14), which in particular surround the base box (3c) of the main boom (3) from the underside, and thus a releasable connection between the mobile crane (2) and the main boom (3) is relievd at least in part;
- separating supply lines between the mobile crane (2) and its main boom (3);
- releasing the connection between the main boom (3) and the mobile crane (2);
- pivoting the two loading arms (11) until the main boom (3), supported by way of the deposition support (8) which is displaceable in parallel with the longitudinal direction (L) of the transport device (6), is received on the transport device (6) by means of a combined translational and limitedly rotational loading movement (A1), which takes place relative to the transport device (6), away from the mobile crane (2), and is deposited on a shelf (9) of the transport device (6).

11. Method according to claim 10, **characterized in that**, before the loading movement (A1) or before a step preceding the loading movement (A1), the mobile crane (2) is supported, in particular with respect to a substrate (U).

12. Method according to either claim 10 or claim 11, **characterized in that**, before the loading movement (A1) or before one of the steps preceding the loading movement (A1), the attachment part transport unit (5) is coupled to the mobile crane (2), wherein, if necessary a support of the mobile crane (2), which had taken place previously, is removed and the attachment part transport unit (5) is decoupled from the rest of the mobile crane (2), for the purpose of transporting the main boom (3) received, in particular secured, on the transport device (6).

13. Method for connecting a main boom (3), which is received on a transport device (6) of a mobile crane system (1) according to any of claims 1 to 9, which main boom is supported by its head end (3a) on a deposition support (8), and by a base box (3c), located between the head end (3a) and the foot end (3b) thereof opposite said head end, on a shelf (9), having an associated mobile crane (2), said method comprising the following steps:
- providing the attachment part transport unit (5), having the received attachment part (3), in the region of the mobile crane (2) in such a way that the main boom (3) is oriented, having its foot end (3b) at the front, on a coupling point of the mobile crane (2) corresponding to its foot end (3b);
**characterized by** the steps of:
- pivoting two loading arms (11) of the attachment part transport unit (5), until the main boom (3) is lifted by means of a holding means (14), which is already arranged between the supporting ends (13) of the loading arms (11) and is detachably connected to the base box (3a), in particular by encompassing the base box (3a) from a lower side, or is to be arranged beforehand and to be detachably connected to the base box (3a), in particular by encompassing the base box (3a) from a lower side, and is moved away from the shelf (9) at least in part towards the mobile crane (2), having its foot end (3b) at the front, in a combined translational and limitedly rotational unloading movement (A2) on the basis of pivot movements (S) of the loading arms (11) relative to the transport device (6), wherein the deposition support (8) is displaced in parallel with a longitudinal direction (L) of the transport device (6);
- aligning the foot end (3b) of the main boom (3) as required with respect to a corresponding coupling point of the mobile crane (2) by synchronous and/or mutually independent pivot movements (S) of the loading arms (11);
- connecting the attachment part (3) to the mobile crane (2);
- pivoting the two loading arms (11) until the holding means (14) detachably connected to the base box (3c) of the main boom (3) is relaxed; - detaching the holding means (14) from the supporting ends (13) of the loading arms (11);
- connecting supply lines between the mobile crane (2) and its main boom (3);
- prior or subsequent connecting of a luffing cylinder (2c) of the mobile crane (2) to the main boom (3).

14. Method according to claim 13, **characterized in that**, before the unloading movement (A2) or before one of the steps preceding the unloading movement (A2), the mobile crane (2) is supported, in particular with respect to a substrate (U).

15. Method according to either claim 13 or claim 14, **characterized in that**, before the loading movement (A2) or before one of the steps preceding the loading movement (A2), the attachment part transport unit (5) is coupled to the mobile crane (2), wherein, if necessary a support, which had taken place previously, is removed, for the purpose of moving and/or using the mobile crane (2) and the attachment part transport unit (5) is decoupled from the rest of the mobile crane (2).

## Revendications

1. Système de grue automotrice (1), comprenant une grue automotrice (2), pourvue d'un accessoire amovible (3), notamment d'une flèche principale, ainsi qu'une unité de transport d'accessoire (5) conçue pour recevoir l'accessoire (3) détaché de la grue automotrice (2) et comprenant un dispositif de transport mobile (6) destiné au transport de l'accessoire (3), au moins un bras de chargement (11) étant disposé sur le dispositif de transport (6), un accessoire (3), qui doit être reçu ou qui est déjà reçu, pouvant être accouplé à une extrémité de support libre (13) du bras de chargement (11), et le bras de chargement (11) pouvant être disposé de manière pivotante sur le dispositif de transport (6) de manière à ce qu'un accessoire (3) à charger ou décharger puisse être amené sur le dispositif de transport (6) ou descendu du dispositif de transport (6), ledit système comprenant un chevalet de support (8) qui est disposé sur le dispositif de transport (6) et qui conçu pour supporter l'accessoire (3), notamment au niveau d'une extrémité de tête (3a) de l'accessoire (3), **caractérisé en ce que** le chevalet de support (8) est disposé de manière coulissante parallèlement à une direction longitudinale (L) du dispositif de transport (6).

2. Système de grue automotrice (1) selon la revendication 1, **caractérisé par** un support (9) disposé sur le dispositif de transport (6) et destiné à supporter un accessoire (3), notamment dans une zone comprise entre une extrémité de tête (3a) et une extrémité de pied (3b).

3. Système de grue automotrice (1) selon la revendication 1 ou 2, **caractérisé en ce que** le chevalet de support (8) est conçu de manière à ce qu'une flèche principale (3), qui peut venir en appui sur celui-ci par le biais de son extrémité de tête (3a), est mobile à l'état en appui sur le chevalet de support (8), en particulier est apte à pivoter dans un plan vertical et/ou un plan horizontal.

4. Système de grue automotrice (1) selon l'une des revendications 1 à 3, **caractérisé en ce que** le bras de chargement (11) est disposé de manière pivotante sur le dispositif de transport (6) de manière à ce qu'un accessoire (3) à charger ou décharger puisse se déplace sur un chemin avec une composante de mouvement dans une direction verticale (Y) et une composante de mouvement une direction horizontale (X).

5. Système de grue automotrice (1) selon l'une des revendications 1 à 4, **caractérisé en ce qu'**un accessoire (3), placé en appui par son extrémité de tête (3a) sur le chevalet de support (8) et accouplé au moins indirectement à l'extrémité de support libre (13) de l'au moins un bras de chargement (11), peut être déplacé par un mouvement de pivotement (S) suivant
a) un mouvement de chargement (A1) combiné de translation et de rotation limitée et effectué par rapport au dispositif de transport (6) en direction du support (9), notamment dans la direction opposée à la grue automotrice associée (2),
ou
b) un mouvement de déchargement (A1) combiné de translation et de rotation limitée et effectué par rapport au dispositif de transport (6) dans la direction opposée au support (9), notamment en direction de la grue automotrice associée (2).

6. Système de grue automotrice (1) selon l'une des revendications 1 à 5, **caractérisé par** deux bras de chargement (11) espacés l'un de l'autre, les mouvements de pivotement (S) des bras de chargement (11) pouvant être effectués de manière synchrone les uns aux autres et/ou indépendamment les uns des autres.

7. Système de grue automotrice (1) selon l'une des revendications 1 à 6, **caractérisé par** un entraînement linéaire (15), notamment un vérin hydraulique, disposé entre l'au moins un bras de chargement (11) et le dispositif de transport (6), un mouvement de pivotement (S) du bras de chargement (11) étant basé sur une modification de la longueur de l'entraînement linéaire (15).

8. Système de grue automotrice (1) selon la revendication 7, **caractérisé en ce que** les portions d'extrémité (11b, 11c) sont inclinées vers un côté du bras de chargement (11) qui est opposé à l'entraînement linéaire (15).

9. Système de grue automotrice (1) selon l'une des revendications 1 à 8, **caractérisé en ce que** l'au moins un bras de chargement (11) est conçu pour être télescopique.

10. Procédé de réception d'un accessoire, détachable d'une grue automotrice (2) et se présentant sous la forme d'une flèche principale (3) de celle-ci, sur un dispositif de transport (6) d'un système formant grue automotrice (1) selon l'une des revendications 1 à 9,
ledit procédé comprenant les étapes suivantes :
- prévoir l'unité de transport d'accessoire (5) dans le prolongement de la grue automotrice (2) ;
- orienter une direction longitudinale (L1) de la flèche principale (3) par rapport à une direction longitudinale (L) du dispositif de transport (6) ;
- déposer une extrémité de tête (3a) de la flèche principale (3) sur un chevalet de support (8) du dispositif de transport (6) par soulèvement de la flèche principale (3) par le biais de son vérin de levage (2c) ;
- désaccoupler le vérin de levage (2c) de la flèche principale (3) ;
**caractérisé par** les étapes suivantes :
- faire pivoter deux bras de chargement (11) de l'unité de transport d'accessoire (5) jusqu'à ce que les deux bras de chargement (11) fassent saillie par leurs extrémités de support libres (13) dans la zone d'une portion de la flèche principale (3) situé entre l'extrémité tête (3a) et l'extrémité de pied (3b) ;
- disposer un moyen de retenue (14) entre les extrémités de support (13) des deux bras de chargement (11) de manière à ce que le moyen de retenue (14) s'étende jusqu'à un caisson de base (3c) de la flèche principale (3), notamment au-dessous du caisson de base (3c) de la flèche principale (3) à travers celle-ci ;
- réaliser une liaison amovible entre le moyen de retenue (14) et le caisson de base (3c), notamment par engagement au moins partiel du moyen de retenue (14) autour du caisson de base (3c) depuis le côté inférieur ;
- faire pivoter des deux bras de chargement (11) de manière à soulever la flèche principale (3) au moins d'un côté par le biais du moyen de retenue (14) qui s'engage au moins partiellement autour du caisson de base (3c) de la flèche principale (3) depuis le côté inférieur et ainsi à soulager une liaison amovible au moins partiellement entre la grue automotrice (2) et la flèche principale (3) ;
- couper les conduites d'alimentation entre la grue automotrice (2) et la flèche principale (3) ;
- libérer la liaison entre la flèche principale (3) et la grue automotrice (2) ;
- faire pivoter les deux bras de chargement (11) de manière à ce que la flèche principale (3), supportée par le chevalet de support (8) pouvant coulisser parallèlement à la direction longitudinale (L) du dispositif de transport (6), soit reçu sur le dispositif de transport (6), et placé sur un support (9) du dispositif de transport (6), par un mouvement de chargement combiné (A1) de translation et de rotation limitée effectué par rapport au dispositif de transport (6) depuis la grue automotrice (2).

11. Procédé selon la revendication 10, **caractérisé en ce que**, avant le mouvement de chargement (A1) ou avant l'une des étapes précédant le mouvement de chargement (A1), la grue automotrice (2) est en appui, notamment par rapport une base (U).

12. Procédé selon la revendication 10 ou 11, **caractérisé en ce que**, avant le mouvement de chargement (A1) ou avant l'une des étapes précédant le mouvement de chargement (A1), l'unité de transport d'accessoire (5) est accouplée à la grue automotrice (2), si nécessaire un support préalablement effectué de la grue automotrice (2) étant soulevé et l'unité de transport d'accessoire (5) étant désaccouplé du reste de la grue automotrice (2) pour transporter la flèche principale (3) reçue, notamment sécurisée, sur le dispositif de transport (6).

13. Procédé de raccordement d'une flèche principale (3) reçue sur un dispositif de transport (6) d'un système de grue automotrice (1) selon l'une des revendications 1 à 9, laquelle flèche principale est en appui par son extrémité de tête (3a) sur un chevalet de support (8) et par un caisson de base (3c), placé entre l'extrémité de tête (3a) et son extrémité de pied à l'opposé de celle-ci, sur un support (9), à une grue automotrice associée (2), ledit procédé comprenant les étapes suivantes :
- munir l'unité de transport d'accessoire (5) de l'accessoire reçu (3) dans la zone de la grue automotrice (2) de manière à orienter la flèche principale (3) avec son extrémité de pied (3b) vers l'avant sur un point d'accouplement de la grue automotrice (3) qui correspond à son extrémité de pied (3b) ;
**caractérisé par** les étapes suivantes :
- faire pivoter deux bras de chargement (11) de l'unité de transport d'accessoire (5) de manière à soulever la flèche principale (3) depuis le support (9) du dispositif de transport (6) par le biais d'un moyen de retenue (14) qui est déjà disposé entre les extrémités de support (13) des bras de chargement (11) et qui est relié de manière amovible au caisson de base (3a), notamment par engagement autour du caisson de base (3a) depuis le côté inférieur, ou qui est à disposer auparavant et qui est à relier de manière amovible au caisson de base, notamment par engagement autour du caisson de base (3a) depuis le côté inférieur, et la déplacer avec son extrémité de pied vers l'avant depuis le support (9) au moins partiellement en direction de la grue automotrice (2) par mouvement de support combiné (A2) de translation et de rotation limitée effectué par rapport au dispositif de transport (6) sur la base de mouvements de pivotement (S) des bras de chargement (11), le chevalet de support (8) étant coulissé parallèlement à une direction longitudinale (L) du dispositif de transport (6) ;
- si nécessaire orienter l'extrémité de pied (3b) de la flèche principale (3) par rapport à un point d'accouplement correspondant de la grue automotrice (2) par des mouvements de pivotement (S) synchrones et/ou indépendants des bras de chargement (11) ;
- relier l'accessoire (3) à la grue automotrice (2) ;
- faire pivoter les deux bras de chargement (11) de manière à soulager le moyen de retenue (14) relié de manière amovible au caisson de base (3c) de la flèche principale (3) ;
- détacher le moyen de retenue (14) des extrémités de support (13) des bras de chargement (11) ;
- relier les conduites d'alimentation entre la grue automotrice (2) et sa flèche principale (3) ;
- relier auparavant ou ultérieurement un vérin de levage (2c) de la grue automotrice (2) à la flèche principale (3).

14. Procédé selon la revendication 13, **caractérisé en ce que**, avant le mouvement de déchargement (A2) ou avant l'une des étapes précédant le mouvement de déchargement (A2), la grue automotrice (2) est en appui, notamment contre une base (U).

15. Procédé selon la revendication 13 ou 14, **caractérisé en ce que**, avant le mouvement de déchargement (A2) ou avant l'une des étapes précédant le mouvement de déchargement (A2), l'unité de transport d'accessoire (5) est accouplé à la grue automotrice (2), un appui préalablement effectué étant si nécessaire supprimé et l'unité de transport d'accessoire (5) étant désaccouplé du reste de la grue automotrice (2) afin de déplacer et/ou d'utiliser la grue automotrice (2).
